(19) Europäisches Patentamt
European Patent Office
Office européen des brevets

(11) **EP 4 560 928 A1**

(12) **EUROPEAN PATENT APPLICATION**
published in accordance with Art. 153(4) EPC

(43) Date of publication:
**28.05.2025 Bulletin 2025/22**

(21) Application number: **23849336.5**

(22) Date of filing: **31.07.2023**

(51) International Patent Classification (IPC):
***H04B 1/7176*** (2011.01)

(52) Cooperative Patent Classification (CPC):
**H04B 1/7163; H04B 1/717; H04B 1/7176;
H04B 1/7183;** Y02D 30/70

(86) International application number:
**PCT/CN2023/110167**

(87) International publication number:
**WO 2024/027628 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.08.2022 CN 202210926673
23.09.2022 CN 202211167059**

(71) Applicant: **Huawei Technologies Co., Ltd.
Shenzhen, Guangdong 518129 (CN)**

(72) Inventors:
• **WANG, Bichai
Shenzhen, Guangdong 518129 (CN)**
• **LI, Xueru
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND APPARATUS**

(57)    This application relates to a communication method and apparatus. The method includes: modulating first data to obtain a first UWB frame, where the first data includes a plurality of bits, the first UWB frame includes one or more modulation symbols, a first modulation symbol is any one of the one or more modulation symbols, the first modulation symbol represents M bits of the plurality of bits, the first modulation symbol includes pulse signals of K frequencies, M is an integer greater than or equal to 2, and K is an integer less than or equal to M and greater than or equal to 0; and sending the first UWB frame. Because M is greater than or equal to 2, this means that in embodiments of this application, a quantity of bits represented by one modulation symbol may be increased, and more data can be transmitted in a same time period, thereby improving a peak data rate of a UWB signal.

FIG. 5

## Description

### CROSS-REFERENCE TO RELATED APPLICATIONS

This application claims priorities to Chinese Patent Application No. 202210926673.4, filed with the China National Intellectual Property Administration on August 3, 2022 and entitled "UWB MODULATION METHOD", which is incorporated herein by reference in its entirety; and to Chinese Patent Application No. 202211167059.0, filed with the China National Intellectual Property Administration on September 23, 2022 and entitled "COMMUNICATION METHOD AND APPARATUS", both of which are incorporated herein by reference in their entireties.

### TECHNICAL FIELD

This application relates to the field of communication technologies, and in particular, to a communication method and apparatus.

### BACKGROUND

In an ultra-wideband (ultra-wideband, UWB) technology, high-precision positioning or data transmission can be implemented by sending nanosecond-level short pulses. The UWB technology supports both coherent reception and non-coherent reception. The use of non-coherent reception manner makes implementation costs and power consumption low for a non-coherent receiver. Therefore, the non-coherent reception is a potential choice for low-power communication.

An existing UWB non-coherent receiver supports on-off-keying (on-off-keying, OOK) modulation, and each modulation symbol may represent one bit (bit). To avoid interference between modulation symbols, a guard interval between two adjacent modulation symbols usually needs to be greater than or equal to a maximum multipath delay spread of a UWB signal. A symbol rate of the UWB signal is related to the guard interval between the two adjacent modulation symbols. It can be learned that the maximum multipath delay spread limits the symbol rate of the UWB signal. A peak data rate of the UWB signal is related to the symbol rate of the UWB signal. Therefore, the maximum multipath delay spread also limits the peak data rate of the UWB signal.

### SUMMARY

Embodiments of this application provide a communication method and apparatus, to improve a peak data rate of a UWB signal.

According to a first aspect, a communication method is provided. The method may be performed by a sending device, may be performed by another device including a function of the sending device, or may be performed by a chip system (or a chip) or another functional module. The chip system or the functional module can implement the function of the sending device. The chip system or the functional module is, for example, disposed in the sending device. The sending device is, for example, a terminal device or a network device, and the sending device may have a UWB function. The method includes: modulating first data to obtain a first UWB frame, where the first data includes a plurality of bits, the first UWB frame includes one or more modulation symbols, a first modulation symbol is any one of the one or more modulation symbols, the first modulation symbol represents M bits of the plurality of bits, the first modulation symbol includes pulse signals of K frequencies, M is an integer greater than or equal to 2, and K is an integer less than or equal to M and greater than or equal to 0; and sending the first UWB frame.

In this embodiment of this application, one modulation symbol may represent M bits, and M is greater than or equal to 2. This means that in this embodiment of this application, a quantity of bits represented by one modulation symbol may be increased, and more data can be transmitted in a same time period, thereby improving a peak data rate of a UWB signal.

In an optional implementation, values of the M bits are all a first value, and K=0; values of the M bits are all a second value, and K=M; or values of the M bits include a first value and a second value, and K is an integer less than M and greater than 0, where the first value is 0, and the second value is 1; or the first value is 1, and the second value is 0. The value of the M bits may be related to the quantity of K, so that a receiving device can determine the value of M based on the pulse signals of the K frequencies, to determine the first data.

In an optional implementation, the M bits correspond to M frequencies, and if a value of a first bit in the M bits is the first value, the first modulation symbol does not include a pulse signal of a frequency corresponding to the first bit, or if a value of a first bit in the M bits is the second value, the first modulation symbol includes a pulse signal of a frequency corresponding to the first bit, where the first value is 0, and the second value is 1; or the first value is 1, and the second value is 0. If the value of the first bit in the M bits is the first value, the pulse signals of the K frequencies do not include the pulse signal of the frequency corresponding to the first bit; or if the value of the first bit in the M bits is the second value, the pulse signals of the K frequencies may include the pulse signal of the frequency corresponding to the first bit, so that the receiving device can determine the value of M based on the pulse signals of the K frequencies, thereby determining the first data.

In an optional implementation, energy or power of the first modulation symbol is related to a value of K. For example, a larger value of K indicates larger energy or power of the first modulation symbol, so that impact on demodulation performance of the receiving device can be reduced.

In an optional implementation, the energy or the power of the first modulation symbol is K*P, where P is energy or power of a pulse signal of one frequency, P is greater than 0 and less than or equal to a first threshold, and the first threshold is based on a maximum power spectral density constraint and a bandwidth of the pulse signal of the frequency. It may be understood that, if the first modulation symbol includes the pulse signal of the frequency, that is, when K=1, transmit power of the first modulation symbol is, for example, P; or if the first modulation symbol includes the pulse signals of the K frequencies, transmit power of the first modulation symbol may be K*P. It can be learned that, although the pulse signals included in the first modulation symbol increase, compared with sending of the pulse signal of the frequency, when the pulse signals of the plurality of frequencies are sent, transmit power or energy of these pulse signals is not reduced, and the demodulation performance is not affected.

In an optional implementation, the pulse signals of the K frequencies are simultaneously sent. The pulse signals of the K frequencies are simultaneously sent, so that a transmission delay can be reduced.

In an optional implementation, the sending device includes a signal generation apparatus, an adder, and a delayer, the M bits one-to-one correspond to M duration, the M bits correspond to the M frequencies, and the modulating first data to obtain a first UWB frame includes: If a value of a bit corresponding to $i^{th}$ duration in the M duration is the second value, the signal generation apparatus generates a pulse signal of an $i^{th}$ frequency in the M frequencies in the $i^{th}$ duration; or if a value of a bit corresponding to $i^{th}$ duration in the M duration is the first value, skips generating a pulse signal of an $i^{th}$ frequency in the M frequencies in the $i^{th}$ duration, where i is an integer from 1 to M; the delayer delays pulse signals output by the signal generation apparatus in the M duration, so that the pulse signals output in the M duration simultaneously arrive at the adder; and the adder obtains the first modulation symbol based on the pulse signals that are output in the M duration and that simultaneously arrive. The delayer is disposed, so that the pulse signal output by the signal generation apparatus is delayed, so that the pulse signals output in the M duration can simultaneously arrive at the adder, to simultaneously send the pulse signals of the K frequencies. The pulse signals of the K frequencies can be simultaneously sent by adding only the delayer, so that a change to the device is small, and costs are also reduced.

In an optional implementation, the delayer includes M-1 delayers, pulse signals output by the signal generation apparatus in first duration to $(M-1)^{th}$ duration are delayed using the M-1 delayers respectively, delay duration of an $i^{th}$ delayer in the M-1 delayers is $T*(M-i)+\delta_i$, T indicates any duration in the M duration, and $\delta_i$ is a constant. For example, the M-1 delayers one-to-one correspond to the M-1 duration. Therefore, the pulse signal output by the signal generation apparatus in the M-1 duration may be delayed. Delay duration of the M-1 delayers is set, so that the pulse signals output by the signal generation apparatus in the M duration can simultaneously arrive at the adder.

In an optional implementation, the signal generation apparatus includes at least one of the following: a pulse generator, an oscillator, or a mixer. That the signal generation apparatus generates a pulse signal of an $i^{th}$ frequency in the M frequencies in the $i^{th}$ duration includes: The oscillator generates an $i^{th}$ carrier signal in the $i^{th}$ duration, and the mixer obtains the pulse signal of the $i^{th}$ frequency based on the $i^{th}$ carrier signal and a pulse signal from the pulse generator; or the pulse generator generates the pulse signal of the $i^{th}$ frequency in the $i^{th}$ duration; or the oscillator generates the pulse signal of the $i^{th}$ frequency in the $i^{th}$ duration. For example, the signal generation apparatus may include the pulse generator, the oscillator, and the mixer, which are similar to functional modules included in an existing device. This facilitates a design of the sending device provided in this embodiment of this application. Alternatively, the signal generation apparatus may include the pulse generator or the oscillator, so that a structure of the sending device can be simplified, and power consumption and costs of the sending device can be reduced.

In an optional implementation, sending time of the pulse signals of the K frequencies is different, and the pulse signals of the K frequencies are in duration of the first modulation symbol in time domain. Alternatively, the pulse signals of the K frequencies may not be simultaneously sent, so that a sending process can be simplified. In addition, the pulse signals of the K frequencies are in the duration of the first modulation symbol in the time domain, so that interference between modulation symbols can be avoided.

In an optional implementation, the sending device includes a signal generation apparatus, the M bits one-to-one correspond to M duration, the M bits correspond to the M frequencies, and the modulating first data to obtain a first UWB frame includes: If a value of a bit corresponding to $i^{th}$ duration in the M duration is the second value, the signal generation apparatus generates a pulse signal of an $i^{th}$ frequency in the M frequencies in the $i^{th}$ duration; or if a value of a bit corresponding to $i^{th}$ duration in the M duration is the first value, skips generating a pulse signal of an $i^{th}$ frequency in the M frequencies in the $i^{th}$ duration, where i is an integer from 1 to M. For example, if the structure of the sending device is the same as a structure of an existing device for sending the UWB signal, the sending device can generate the pulse signals of the K frequencies by generating or not generating the pulse signal based on the value of the corresponding bit in the M duration. In this manner, the structure of the device does not need to be changed. This facilitates compatibility with the existing device.

In an optional implementation, a clock frequency of the sending device is greater than or equal to a first frequency, and a reciprocal of the first frequency is a sending time difference between pulse signals of any two adjacent sending frequencies in pulse signals of the M frequencies. The clock frequency of the sending device is greater than or equal to the first frequency. For example, in an implementation, a clock frequency of the signal generation apparatus is greater than or equal to the first frequency. Because the signal generation apparatus needs to generate the pulse signals of the K frequencies based on the sending time difference between the pulse signals, the clock frequency of the sending device should be greater than or equal to the first frequency.

In an optional implementation, the sending device includes a pulse generator, a delayer, a mixer, and an oscillator. The M bits one-to-one correspond to M duration, the M bits correspond to the M frequencies, i is an integer from 1 to M, and the modulating first data to obtain a first UWB frame includes: The pulse generator generates a baseband pulse signal in $i^{th}$ duration in the M duration; the delayer delays a baseband pulse signal output by the pulse generator in M-1 duration in the M duration, so that baseband pulse signals output in the M duration arrive at the mixer in a time division mode; and if a value of a bit corresponding to the $i^{th}$ duration in the M duration is the second value, the oscillator generates an $i^{th}$ carrier signal in the $i^{th}$ duration, and the mixer obtains a pulse signal of an $i^{th}$ frequency based on the baseband pulse signal and the $i^{th}$ carrier signal; or if a value of a bit corresponding to the $i^{th}$ duration in the M duration is the first value, skips generating the $i^{th}$ carrier signal in the $i^{th}$ duration. In a scenario in which the pulse signals of the K frequencies are sent in the time division manner, the sending device may alternatively be improved. For example, the sending device may include the delayer. The delayer may delay the baseband pulse signal output by the pulse generator, so that the baseband pulse signals output by the pulse generator in the M duration arrive at the mixer in the time division manner, to send the pulse signals of the K frequencies in the time division manner. In this manner, the clock frequency of the sending device may not need to be changed, and a clock requirement for the sending device is low.

In an optional implementation, the delayer includes M-1 delayers, baseband pulse signals output by the pulse generator in first duration to $(M-1)^{th}$ duration are delayed using the M-1 delayers respectively, and delay duration of an $m^{th}$ delayer in the M-1 delayers is m times a sending time difference between pulse signals of any two adjacent sending frequencies in pulse signals of the M frequencies, where m is a positive integer less than M. For example, the M-1 delayers one-to-one correspond to the M-1 duration. Therefore, the pulse signal output by the pulse generator in the M-1 duration may be delayed. The delay duration of the M-1 delayers is set, so that the pulse signals output by the pulse generator in the M duration can arrive at the mixer in the time division manner.

In an optional implementation, before the modulating first data, the method further includes: receiving first indication information from a receiving device, where the first indication information indicates at least one of the following: a frequency supported by the receiving device for demodulation; a value of M; a recommended symbol rate, where the symbol rate is used to determine the duration of the first modulation symbol; a recommended data rate, where the data rate is a transmission rate of the first data; recommended duty cycle information, where the duty cycle information is used to determine one or more of the following: the duration of the first modulation symbol, a value of M, or a transmission rate of the first data; multipath delay spread information, where the multipath delay spread information is used to determine the duration of the first modulation symbol; or channel state information, where the channel state information is used to determine a transmission rate of the first data. The first indication information may indicate information expected by the receiving device, and the sending device may set a modulation scheme based on the information expected by the receiving device, so that the set modulation scheme can meet a requirement of the receiving device.

In an optional implementation, the method further includes: sending second indication information, where the second indication information indicates at least one of the following: the M frequencies; the value of M; a symbol rate of the first data; a data rate of the first data; or a sending time difference between pulse signals of any two adjacent sending frequencies in the pulse signals of the K frequencies when K=M. After determining the modulation scheme, the sending device may indicate, to the receiving device based on the second indication information, a corresponding parameter related to the modulation scheme, so that the receiving device can correctly demodulate the first modulation symbol based on a demodulation scheme corresponding to the modulation scheme.

In an optional implementation, the one or more modulation symbols are located in a payload of the first UWB frame, the first UWB frame further includes a synchronization header SHR and/or a physical header PHR, the SHR and/or the PHR include/includes pulse signals/a pulse signal of one of the M frequencies, and the M frequencies correspond to the M bits. When the payload uses the modulation scheme provided in embodiments of this application, the SHR and/or the PHR may alternatively be sent by using the K frequencies, or may be sent by using only one of the M frequencies instead of the K frequencies, to reduce overheads.

According to a second aspect, a second communication method is provided. The method may be performed by a receiving device, may be performed by another device including a function of the receiving device, or may be performed by a chip system (or a chip) or another functional module. The chip system or the functional module can implement the function of the receiving device. The chip system or the functional module is, for example, disposed in the receiving device. The receiving device is, for example, a terminal device or a network device, and the receiving device may have a UWB function. The method includes: receiving a first UWB frame; and demodulating the first UWB frame to obtain first data, where the first data includes a plurality of bits, the first UWB frame includes one or more modulation symbols, a first modulation symbol is any one of the one or more modulation symbols, the first modulation symbol represents M bits of the plurality of bits, the first modulation symbol includes pulse signals of K frequencies, M is an integer greater than or equal to 2, and K is an integer less than or equal to M and greater than or equal to 0.

In an optional implementation, K=0, and values of the M bits are all a first value; or K=M, and values of the M bits are all a second value; or K is an integer less than M and greater than 0, and values of the M bits include a first value and a second value, where the first value is 0, and the second value is 1; or the first value is 1, and the second value is 0.

In an optional implementation, the M bits correspond to M frequencies, and if the first modulation symbol does not include a pulse signal of a frequency corresponding to a first bit in the M bits, the value of the first bit is the first value, or if the first modulation symbol includes a pulse signal of a frequency corresponding to a first bit in the M bits, the value of the first bit is the second value, where the first value is 0, and the second value is 1; or the first value is 1, and the second value is 0.

In an optional implementation, energy or power of the first modulation symbol is related to a value of K.

In an optional implementation, the energy or the power of the first modulation symbol is K*P, where P is energy or power of a pulse signal of one frequency, P is greater than 0 and less than or equal to a first threshold, and the first threshold is based on a maximum power spectral density constraint and a bandwidth of the pulse signal of the frequency.

In an optional implementation, the receiving device includes M signal processing apparatuses, and the demodulating the first UWB frame to obtain first data includes: The M signal processing apparatuses separately process the first UWB frame, to determine a frequency of a pulse signal include in the first UWB frame, and determine the first data based on the frequency of the pulse signal included in the first UWB frame.

In an optional implementation, before the receiving a first UWB frame, the method further includes: sending first indication information to a sending device, where the first indication information indicates at least one of the following: a frequency supported by the receiving device for demodulation; a value of M; a recommended symbol rate, where the symbol rate is used to determine duration of the first modulation symbol; a recommended data rate, where the data rate is a transmission rate of the first data; recommended duty cycle information, where the duty cycle information is used to determine one or more of the following: duration of the first modulation symbol, a value of M, or a transmission rate of the first data; multipath delay spread information, where the multipath delay spread information is used to determine duration of the first modulation symbol; or channel state information, where the channel state information is used to determine a transmission rate of the first data.

In an optional implementation, the method further includes: receiving second indication information, where the second indication information indicates at least one of the following: the M frequencies; the value of M; a symbol rate of the first data; a data rate of the first data; or a sending time difference between pulse signals of any two adjacent sending frequencies in the pulse signals of the K frequencies when K=M.

In an optional implementation, the one or more modulation symbols are located in a payload of the first UWB frame, and the method further includes: receiving a pulse signal of one of the M frequencies; and obtaining, based on the pulse signal of the frequency, a synchronization header SHR and/or a physical header PHR included in the first UWB frame.

For technical effect brought by the second aspect or the optional implementations, refer to the descriptions of the technical effect of the first aspect or the corresponding implementations.

According to a third aspect, a communication apparatus is provided. The communication apparatus is, for example, the sending device according to the first aspect and/or the second aspect, a functional module in the sending device, or a large device including the sending device. The communication apparatus may include a signal generation apparatus, an adder, and M-1 delayers. There are M paths between the signal generation apparatus and the adder, and on M-1 paths in the M paths, the M-1 delayers are connected between the signal generation apparatus and the adder. The signal generation apparatus is configured to: if a value of a bit corresponding to $i^{th}$ duration in M duration is a second value, generate a pulse signal of an $i^{th}$ frequency in M frequencies in the $i^{th}$ duration; or if a value of a bit corresponding to $i^{th}$ duration in M duration is a first value, skip generating a pulse signal of an $i^{th}$ frequency in M frequencies in the $i^{th}$ duration, where i is an integer from 1 to M; the M-1 delayers are configured to delay a pulse signal output by the signal generation apparatus in M-1 duration in the M duration, so that pulse signals output in the M duration simultaneously arrive at the adder; and the adder is configured to obtain a first modulation symbol based on the pulse signals that are output in the M duration and that simultaneously arrive, where the first modulation symbol is any one of one or more modulation symbols included in a first UWB frame, the first modulation symbol represents M bits of a plurality of bits included in first data, the M bits one-to-one correspond to the M duration, the M bits correspond to the M frequencies, the first modulation symbol includes pulse signals of K frequencies, M is an integer greater than or equal to 2, and K is an integer less than or equal to M and greater than or equal to 0.

In an optional implementation, delay duration of an $i^{th}$ delayer in the M-1 delayers is $T*(M-i)+\delta i$, T indicates any duration in the M duration, and $\delta_i$ is a constant.

In an optional implementation, the signal generation apparatus is configured to generate the pulse signal of the $i^{th}$ frequency in the M frequencies in the $i^{th}$ duration in the following manner: an oscillator, configured to generate an $i^{th}$ carrier signal in the $i^{th}$ duration, and a mixer, configured to obtain the pulse signal of the $i^{th}$ frequency based on the $i^{th}$ carrier signal and a pulse signal from a pulse generator, where the signal generation apparatus includes the pulse generator, the mixer connected to the pulse generator, and the oscillator connected to the mixer; or a pulse generator, configured to generate the pulse signal of the $i^{th}$ frequency in the $i^{th}$ duration, where the signal generation apparatus includes the pulse generator; or an oscillator, configured to generate the pulse signal of the $i^{th}$ frequency in the $i^{th}$ duration, where the signal generation apparatus includes the oscillator.

For technical effect brought by the third aspect or the optional implementations, refer to the descriptions of the technical effect of the first aspect or the corresponding implementations.

According to a fourth aspect, another communication apparatus is provided. The communication apparatus is, for example, the sending device according to the first aspect and/or the second aspect, a functional module in the sending device, or a large device including the sending device. The communication apparatus may include a pulse generator, M-1 delayers, a mixer, and an oscillator. There are M paths between the pulse generator and the mixer, and on M-1 paths in the M paths, the M-1 delayers are connected between the pulse generator and the mixer. M duration corresponds to M bits, the M bits correspond to M frequencies, i is an integer from 1 to M, and modulating first data to obtain a first UWB frame includes: The pulse generator is configured to generate a baseband pulse signal in $i^{th}$ duration in the M duration; the M-1 delayers are configured to delay a baseband pulse signal output by the pulse generator in M-1 duration in the M duration, so that baseband pulse signals output in the M duration arrive at the mixer in a time division mode; and the oscillator is configured to: if a value of a bit corresponding to the $i^{th}$ duration in the M duration is a second value, generate an $i^{th}$ carrier signal in the $i^{th}$ duration, and the mixer is configured to obtain a pulse signal of an $i^{th}$ frequency based on the baseband pulse signal and the $i^{th}$ carrier signal; or the oscillator is configured to: if a value of a bit corresponding to the $i^{th}$ duration in the M duration is a first value, skip generating an $i^{th}$ carrier signal in the $i^{th}$ duration.

In an optional implementation, delay duration of an $m^{th}$ delayer in the M-1 delayers is m times a sending time difference between pulse signals of any two adjacent sending frequencies in pulse signals of the M frequencies, where m is a positive integer less than M.

For technical effect brought by the fourth aspect or the optional implementations, refer to the descriptions of the technical effect of the first aspect or the corresponding implementations.

According to a fifth aspect, another communication apparatus is provided. The communication apparatus may be the sending device according to the first aspect and/or the second aspect. The communication apparatus has a function of the sending device. The communication apparatus is, for example, the sending device, a large device including the sending device, or a functional module in the sending device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a collective name of these functional modules.

In an optional implementation, a first UWB frame includes one or more modulation symbols, a first modulation symbol is any one of the one or more modulation symbols, the first modulation symbol represents M bits of a plurality of bits, the first modulation symbol includes pulse signals of K frequencies, M is an integer greater than or equal to 2, and K is an integer less than or equal to M and greater than or equal to 0. The transceiver unit (or the sending unit) is configured to send the first UWB frame.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the function of the sending device according to the first aspect and/or the second aspect.

According to a sixth aspect, another communication apparatus is provided. The communication apparatus may be the receiving device according to the first aspect and/or the second aspect. The communication apparatus has a function of the receiving device. The communication apparatus is, for example, the receiving device, a large device including the receiving device, or a functional module in the receiving device, for example, a baseband apparatus or a chip system. **In** an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the fifth aspect.

**In** an optional implementation, the transceiver unit (or the receiving unit) is configured to receive a first UWB frame; and the processing unit is configured to demodulate the first UWB frame to obtain first data, where the first data includes a plurality of bits, the first UWB frame includes one or more modulation symbols, a first modulation symbol is any one of the one or more modulation symbols, the first modulation symbol represents M bits of the plurality of bits, the first modulation symbol includes pulse signals of K frequencies, M is an integer greater than or equal to 2, and K is an integer less than or equal to M and greater than or equal to 0.

**In** an optional implementation, the communication apparatus further includes a storage unit (sometimes also referred to as a storage module). The processing unit is configured to be coupled to the storage unit, and execute a program or instructions in the storage unit, to enable the communication apparatus to perform the function of the receiving device according to the first aspect and/or the second aspect.

According to a seventh aspect, a communication apparatus is provided. The communication apparatus may be a sending device, or a chip or a chip system used in the sending device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the sending device according to the foregoing aspects.

According to an eighth aspect, a communication apparatus is provided. The communication apparatus may be a receiving device, or a chip or a chip system used in the receiving device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the receiving device according to the foregoing aspects.

According to a ninth aspect, a communication system is provided, including a sending device and a receiving device. The sending device is configured to perform the communication method performed by the sending device according to the first aspect and/or the second aspect, and the sending device is configured to perform the communication method performed by the receiving device according to the first aspect and/or the second aspect.

In an optional implementation, the sending device may be implemented via the communication apparatus according to the third aspect, the fourth aspect, the fifth aspect, or the seventh aspect.

In an optional implementation, the receiving device may be implemented via the communication apparatus according to the sixth aspect or the eighth aspect.

According to a tenth aspect, a computer-readable storage medium is provided. The computer-readable storage medium is configured to store a computer program or instructions. When the computer program or the instructions are run, the method performed by the sending device or the receiving device according to the foregoing aspects is implemented.

According to an eleventh aspect, a computer program product including instructions is provided. When the computer program product is run on a computer, the method according to the foregoing aspects is implemented.

BRIEF DESCRIPTION OF DRAWINGS

FIG. 1 is a diagram of an OOK modulation scheme;
FIG. 2 is a diagram of a multipath delay spread;
FIG. 3 is a diagram of duration of a modulation symbol;
FIG. 4 is a diagram of an application scenario according to an embodiment of this application;
FIG. 5 is a flowchart of a communication method according to an embodiment of this application;
FIG. 6 is a diagram of pulse signals of K frequencies in the case of M=2 according to an embodiment of this application;
FIG. 7 is a diagram of pulse signals of K frequencies in the case of M=3 according to an embodiment of this application;
FIG. 8 is a diagram of a structure of a conventional sending device;
FIG. 9A is a diagram of a structure of a sending device that can simultaneously send pulse signals of K frequencies according to an embodiment of this application;
FIG. 9B is a diagram of another structure of a sending device that can simultaneously send pulse signals of K frequencies according to an embodiment of this application;
FIG. 10A is a diagram of another structure of a sending device that can simultaneously send pulse signals of K frequencies according to an embodiment of this application;
FIG. 10B is a diagram of another structure of a sending device that can simultaneously send pulse signals of K frequencies according to an embodiment of this application;

FIG. 11 is a diagram of a structure of a sending device that can send pulse signals of K frequencies in a time division manner according to an embodiment of this application;

FIG. 12 is another diagram of pulse signals of K frequencies when M=2 according to an embodiment of this application;

FIG. 13A and FIG. 13B are diagrams of two structures of a receiving device according to an embodiment of this application;

FIG. 14 is a diagram of an apparatus according to an embodiment of this application; and

FIG. 15 is a diagram of another apparatus according to an embodiment of this application.

## DESCRIPTION OF EMBODIMENTS

To make objectives, technical solutions, and advantages of embodiments of this application clearer, the following further describes embodiments of this application in detail with reference to accompanying drawings.

In embodiments of this application, unless otherwise specified, a quantity of nouns indicates "a singular noun or a plural noun", namely, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. A character "/" usually indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one item (piece) of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance, or the like of the plurality of objects. For example, a first set and a second set may be a same set, or may be different sets. In addition, the names do not indicate a difference between content, application scenarios, priorities, importance, or the like of the two sets. In addition, step numbers in embodiments described in this application are merely intended to distinguish between different steps, but are not intended to limit a sequence of the steps. For example, S501 may be performed before S502, may be performed after S502, or may be simultaneously performed with S502.

The following describes some terms or concepts in embodiments of this application, to facilitate understanding of a person skilled in the art.

In embodiments of this application, a terminal device is a device with a wireless transceiver function, and may be a stationary device, a mobile device, a handheld device (for example, a mobile phone), a wearable device, a vehicle-mounted device, or a wireless apparatus (for example, a communication module, a modem, or a chip system) built in the foregoing device. The terminal device is configured to connect to a person, an object, a machine, and the like, and may be widely used in various scenarios. For example, the terminal device includes but is not limited to a terminal device in the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self driving (self driving), remote medical (remote medical), a smart grid (smart grid), smart furniture, smart office, a smart wearable, smart transportation, a smart city (smart city), an unmanned aerial vehicle, and a robot. The terminal device may sometimes be referred to as UE, a terminal, an access station, a UE station, a remote station, a wireless communication device, a user apparatus, or the like. For ease of description, an example in which the terminal device is UE is used for description in embodiments of this application.

A network device in embodiments of this application includes, for example, an access network device and/or a core network device. The access network device is a device with a wireless transceiver function, and is configured to communicate with the terminal device. The access network device includes but is not limited to a base station (base transceiver station (base transceiver station, BTS), NodeB, eNodeB/eNB, or gNodeB/gNB), a transmission reception point (transmission reception point, TRP), or a subsequently evolved base station in the 3rd generation partnership project (3rd generation partnership project, 3GPP), an access node in a wireless fidelity (wireless fidelity, Wi-Fi) system, a wireless relay node, a wireless backhaul node, or the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller, a central unit (central unit, CU), and/or a distributed unit (distributed unit, DU) in a cloud radio access network (cloud radio access network, CRAN) scenario. Alternatively, the access network device may be a server or the like. For example, a network device in the vehicle-to-everything (vehicle-to-everything, V2X) technology may be a road side unit (road side unit, RSU). The following uses an example in which the access network device is a base station for description. The base station may communicate with the terminal device, or may communicate with the terminal device via a relay station. The terminal device may communicate with the plurality of base stations in different access technologies. The core network device is configured to implement functions such as mobility management, data processing, session management, and policy and charging. Names of devices that implement core network functions in systems of different access technologies may be different. This is not limited in embodiments of this application. A 5G system is used as an example. The core network device includes an access and mobility management function (access and mobility management function, AMF), a session management function (session management function, SMF), a policy control function (policy control function, PCF), a user plane function (user plane function, UPF), and the like.

In embodiments of this application, a communication apparatus configured to implement a function of the network device may be a network device, or may be an apparatus that can support the network device in implementing the function, for example, a chip system. The apparatus may be installed in the network device. In the technical solutions provided in embodiments of this application, an example in which the apparatus configured to implement the function of the network device is a network device is used to describe the technical solutions provided in embodiments of this application.

In a UWB technology, high-precision positioning or data transmission can be implemented by sending nanosecond-level short pulses. The UWB technology supports both coherent reception and non-coherent reception. In a coherent reception manner, a coherent receiver needs to generate a carrier signal having a same frequency and a same phase as a transmitter, to perform downconversion and phase detection on a received signal. Therefore, phase synchronization usually needs to be performed by using a high-frequency phase-locked loop (phase-locked loop, PLL), and implementation complexity and power consumption are high. However, in a non-coherent reception manner, a non-coherent receiver may demodulate a signal through envelope detection, energy detection, or the like, and does not need functional modules such as a high-frequency PLL and a high-frequency analog-to-digital converter (analog-to-digital converter, ADC). Compared with the coherent receiver, the non-coherent receiver has low implementation costs and power consumption, and is a potential receiver architecture that supports low-power communication.

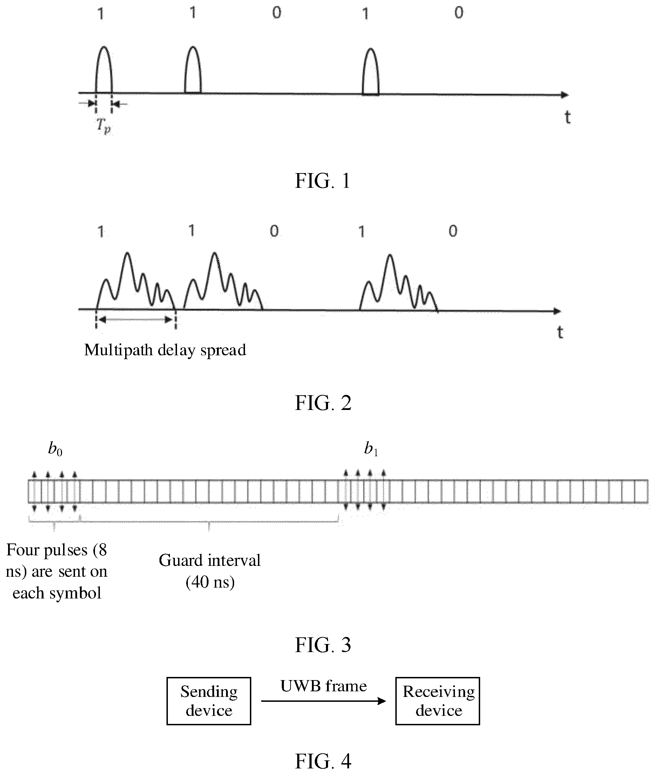

Currently, the non-coherent receiver may support an OOK modulation scheme. In the OOK modulation scheme, if an information bit is "1", one or more pulses may be sent, where the plurality of pulses may be contiguous or discontiguous in time; or if the information bit is "0", no pulse may be sent. For example, refer to FIG. 1. When the information bit is 1, a pulse whose duration is $T_p$ may be sent; or when the information bit is 0, no signal is sent. A receive end may perform energy detection on the received signal. If it is determined that the energy of the received signal is greater than a threshold, the information bit is determined to be "1"; otherwise, the information bit is determined to be "0".

In an actual multipath channel environment, a delay spread may be caused during reception of signals, which is referred to as a multipath delay spread, as shown in FIG. 2. To avoid interference between modulation symbols caused by the multipath delay spread, a guard interval between adjacent modulation symbols should be greater than or equal to a maximum multipath delay spread of a UWB signal. For example, refer to FIG. 3. Each block represents a chip with duration of 2 ns for sending of one pulse. Each modulation symbol (briefly referred to as a "symbol" in FIG. 3) may represent one information bit. If the information bit is "1", four pulses are sent; or if the information bit is "0", no pulse is sent. For example, $b_0$ and $b_1$ in FIG. 3 represent two adjacent modulation symbols, and information bits represented by the two modulation symbols are both "1". For example, if the maximum multipath delay spread is 40 ns, the guard interval between two adjacent modulation symbols should be greater than or equal to 40 ns, and therefore duration of one modulation symbol should be greater than or equal to 48 ns with the sending time of the four pulses counted in. It can be learned that a maximum symbol rate of the UWB signal is 1/48=20.8 MHz. In the OOK modulation, each modulation symbol represents one information bit. Therefore, a maximum peak data rate of the UWB signal is 20.8 Mbps without considering impact of factors such as channel coding. It can be learned that the maximum multipath delay spread limits the symbol rate of the UWB signal, and accordingly limits the peak data rate of the UWB signal.

In view of this, the technical solutions in embodiments of this application are provided. In embodiments of this application, one modulation symbol may represent M bits, and M is greater than or equal to 2. This means that in embodiments of this application, a quantity of bits represented by one modulation symbol may be increased, and more data can be transmitted in a same time period, thereby improving a peak data rate of a UWB signal.

FIG. 4 shows an application scenario according to an embodiment of this application. FIG. 4 includes a sending device and a receiving device. For example, both the two devices are UWB devices. If a device has a UWB function (for example, a UWB chip is disposed in the device), the device may be referred to as a UWB device. Certainly, in addition to the UWB function, the device may further have another function. For example, a mobile phone may have the UWB function, but the mobile phone may further have a call function. This is not limited in embodiments of this application. The sending device can send a UWB frame to the receiving device. The UWB frame may be used for, for example, ranging, or may be used for another communication function. This is not limited in embodiments of this application. The UWB frame may be obtained through modulation based on a modulation scheme provided in embodiments of this application. For example, the sending device is a network device, and the receiving device is a terminal device. Alternatively, the sending device is a terminal device, and the receiving device is a network device. Alternatively, both the sending device and the receiving device are network devices. Alternatively, both the sending device and the receiving device are terminal devices.

The technical solutions provided in embodiments of this application are described below in detail with reference to the accompanying drawings. In embodiments of this application, all optional steps are indicated by dashed lines in corresponding accompanying drawings. In embodiments of this application, "*" and "x" may be replaced with each other, and both indicate a meaning of multiplication. In embodiments of this application, a pulse generator may also be referred to as a pulse shaper, and an oscillator may also be referred to as a carrier generator, a carrier signal generator, a radio frequency signal generator, or the like. In embodiments of this application, a "device" may also be referred to as a "module" or a "unit". For example, the oscillator may also be referred to as an oscillation module or an oscillation unit. In embodiments of this application, that the oscillator generates a carrier signal of a frequency may be understood as that the oscillator generates a carrier signal whose center frequency is the frequency. For example, that the oscillator generates a carrier signal of a frequency $f_1$ may be understood as that a center frequency of the carrier signal is $f_1$.

In the following description process, an example in which all the methods provided in embodiments of this application are applied to the network architecture shown in FIG. 4 is used. For example, the sending device in embodiments of this application is, for example, the sending device in the network architecture shown in FIG. 4, and the receiving device in embodiments of this application is, for example, the receiving device in the network architecture shown in FIG. 4.

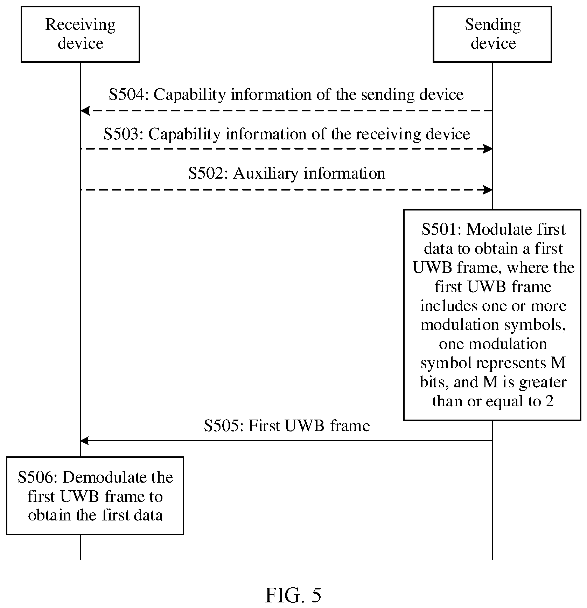

Embodiments of this application provide a communication sending method. FIG. 5 is a flowchart of the method.

S501: A sending device modulates first data to obtain a first UWB frame.

The first data may include a plurality of bits. If there is no channel coding process, the bits included in the first data are, for example, information bits; or if a channel coding process is performed, the bits included in the first data are, for example, encoded bits. The sending device may modulate the plurality of bits to obtain the first UWB frame. For example, the first UWB frame includes one or more modulation symbols. Optionally, the one or more modulation symbols may represent the first data.

For example, the one or more modulation symbols are a payload (payload) of the first UWB frame. One modulation symbol may represent M bits in the plurality of bits. For example, implementations of different modulation symbols in the one or more modulation symbols may be similar, that is, each of the one or more modulation symbols may represent M bits, different modulation symbols represent same or different bits, and M is an integer greater than or equal to 2. For example, in the following description, a first modulation symbol is used as an example for description, and the first modulation symbol is any one of the one or more modulation symbols. The modulation scheme provided in embodiments of this application is, for example, OOK and frequency shift keying (frequency shift keying, FSK) joint modulation, or may be referred to as multi-channel OOK joint modulation or multi-carrier OOK joint modulation. Because the first modulation symbol may represent the M bits, a peak data rate may be increased by M times at a same symbol rate. In addition, the first modulation symbol may include pulse signals of K frequencies (or K types of frequencies). For example, a quantity of pulse signals of any one of the K frequencies included in the first modulation symbol may be greater than or equal to 1, where K is an integer less than or equal to M and greater than or equal to 0. A pulse signal of one frequency may be sent over one channel or one carrier, and bandwidths of pulse signals of different frequencies may be the same or may be different. In embodiments of this application, the pulse signal includes, for example, one or more pulses. If the pulse signal includes a plurality of pulses, the plurality of pulses may be contiguous or may be discontiguous.

For example, if values of the M bits belong to the first set (that is, the M bits are combined as one value, and the value belongs to the first set), or values of the M bits are all a first value (that is, a value of each of the M bits is the first value), K=0. In this case, no pulse signal is sent on the first modulation symbol, that is, the first modulation symbol does not include a pulse signal, or may be understood as that the first modulation symbol does not include pulse signals of preset M frequencies, but it is not excluded that the first modulation symbol includes another pulse signal. Alternatively, if values of the M bits belong to a second set (that is, the M bits are combined as one value, and the value belongs to the second set), or values of the M bits are all a second value (that is, a value of each of the M bits is the second value), K=M. In this case, the first modulation symbol may include pulse signals of M frequencies, and there may include one or more pulse signals of each frequency. Alternatively, if values of the M bits belong to a third set (that is, the M bits are combined as one value, and the value belongs to the third set), or values of the M bits include a first value and a second value (that is, the M bits correspond to M values, and the M values include the first value and the second value), K is an integer less than M and greater than 0. In this case, the first modulation symbol may include the pulse signals of the K frequencies, and there may include one or more pulse signals of each frequency. For example, the first value is "0", and the second value is "1"; or the first value is "1", and the second value is "0". In embodiments of this application, an example in which the first value is "0" and the second value is "1" is used.

The first set may include one or more values, the second set may include one or more values, and the third set may include one or more values. For example, the three sets may include a total of $2^M$ values. For example, M=2. The first set includes, for example, one value, and the value is "00". The second set includes, for example, one value, and the value is "11". The third set includes, for example, two values "01" and "10" respectively. For another example, M=3. The first set includes, for example, one value, and the value is "000". The second set includes, for example, one value, and the value is "111". The third set includes, for example, six values "001", "010", "100", "101", "110", and "011" respectively. For example, all the bits of the values in the first set are a same value. All the bits of the values in the third set are also a same value, but are different from the value in the first set. The values corresponding to all the bits of the values in the second set are not completely the same.

The M frequencies, for example, one-to-one correspond to the M bits. In other words, one of the M frequencies corresponds to one of the M bits. On the contrary, one of the M bits also corresponds to one of the M frequencies. For example, if a value of a first bit in the M bits is the second value, the first modulation symbol includes a pulse signal of a frequency corresponding to the first bit; or if a value of a first bit in the M bits is the first value, the first modulation symbol does not include a pulse signal of a frequency corresponding to the first bit. The first bit is, for example, any one of the M bits.

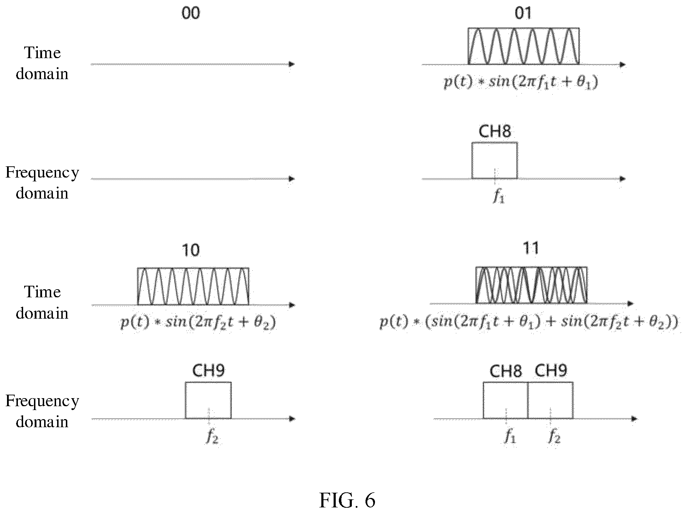

For example, M=2, where a high-order bit corresponds to a frequency $f_2$, and a low-order bit corresponds to a frequency $f_1$. If the values of the M bits are "00", pulse signals of the frequency $f_1$ and the frequency $f_2$ are not sent. It may be understood as that the first modulation symbol does not include the pulse signals of the frequency $f_1$ and the frequency $f_2$, and optionally, the first modulation symbol does not include a pulse signal of any frequency. If the values of the M bits are "01", the first modulation symbol may include one or more pulse signals of the frequency $f_1$, but does not include a pulse signal of the frequency $f_2$. In this case, the first modulation symbol may be represented as p(t)*sin($2\pi f_1$t+$\theta_1$), where p(t) represents a waveform of a baseband pulse signal, $\theta_1$ represents a phase, and $0 \leq \theta_1 \leq 2\pi$. If the values of the M bits are "10", the first modulation symbol may include one or more pulse signals of the frequency $f_2$, but does not include a pulse signal of the frequency $f_1$. In this case, the first modulation symbol may be represented as p(t)*sin($2\pi f_2$t+$\theta_2$), where $\theta_2$ represents a phase, and $0 \leq \theta_2 \leq 2\pi$. If the values of the M bits are "11", the first modulation symbol may include one or more pulse signals of the frequency $f_1$, and one or more pulse signals of the frequency $f_2$. In this case, the first modulation symbol may be represented as p(t)*[sin($2\pi f_1$t+$\theta_1$)+sin($2\pi f_2$t+$\theta_2$)]. For this, refer to FIG. 6. It can be learned that in frequency domain, the pulse signal of the frequency $f_1$ is sent, for example, over a channel CH8, and the pulse signal of the frequency $f_2$ is sent, for example, over a channel CH9.

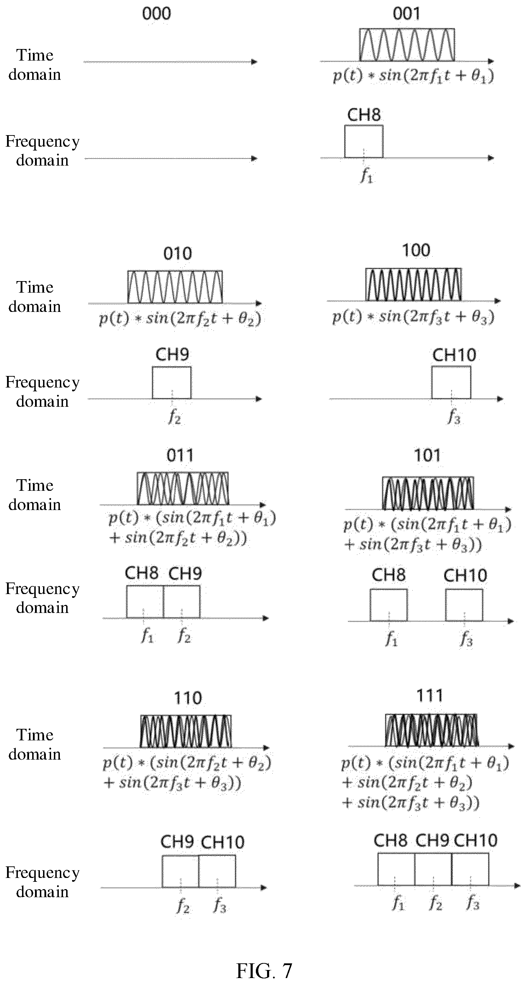

For another example, M=3, where a most significant bit corresponds to a frequency $f_3$, a middle bit corresponds to a frequency $f_2$, and a least significant bit corresponds to a frequency $f_1$. If the values of the M bits are "000", pulse signals of the frequency $f_1$, the frequency $f_2$, and the frequency $f_3$ are not sent. It may be understood as that the first modulation symbol does not include the pulse signals of the frequency $f_1$, the frequency $f_2$, and the frequency $f_3$, and optionally, the first modulation symbol does not include a pulse signal of any frequency. If the values of the M bits are "001", the first modulation symbol includes one or more pulse signals of the frequency $f_1$, but does not include pulse signals of the frequencies $f_2$ and $f_3$. In this case, the first modulation symbol may be represented as p(t)*sin($2\pi f_1$t+$\theta_1$). If the values of the M bits are "010", the first modulation symbol includes one or more pulse signals of the frequency $f_2$, but does not include pulse signals of the frequencies $f_1$ and $f_3$. In this case, the first modulation symbol may be represented as p(t)*sin($2\pi f_2$t+$\theta_2$). If the values of the M bits are "100", the first modulation symbol may include one or more pulse signals of the frequency $f_3$, but does not include pulse signals of the frequencies $f_1$ and $f_2$. In this case, the first modulation symbol may be represented as p(t)*sin($2\pi f_3$t+$\theta_3$), where $\theta_3$ represents a phase, and $0 \leq \theta_3 \leq 2\pi$. If the values of the M bits are "011", the first modulation symbol may include one or more pulse signals of the frequency $f_1$, and one or more pulse signals of the frequency $f_2$, but does not include a pulse signal of the frequency $f_3$. In this case, the first modulation symbol may be represented as p(t)*[sin($2\pi f_1$t+$\theta_1$)+sin($2\pi f_2$t+$\theta_2$)]. If the values of the M bits are "101", the first modulation symbol may include one or more pulse signals of the frequency $f_1$, and one or more pulse signals of the frequency $f_3$, but does not include a pulse signal of the frequency $f_2$. In this case, the first modulation symbol may be represented as p(t)*[sin($2\pi f_1$t+$\theta_1$)+sin($2\pi f_3$t+$\theta_3$)]. If the values of the M bits are "110", the first modulation symbol may include one or more pulse signals of the frequency $f_2$, and one or more pulse signals of the frequency $f_3$. In this case, the first modulation symbol may be represented as p(t)*[sin($2\pi f_2$t+$\theta_2$)+sin($2\pi f_3$t+$\theta_3$)]. If the values of the M bits are "111", the first modulation symbol may include one or more pulse signals of the frequency $f_1$, one or more pulse signals of the frequency $f_2$, and one or more pulse signals of the frequency $f_3$. In this case, the first modulation symbol may be represented as p(t)*[sin($2\pi f_1$t+$\theta_1$)+sin($2\pi f_3$t+$\theta_2$)+sin($2\pi f_3$t+$\theta_3$)]. For this, refer to FIG. 7. It can be learned that in the frequency domain, the pulse signal of the frequency $f_1$ is sent, for example, over the channel CH8, the pulse signal of the frequency $f_2$ is sent, for

example, over the channel CH9, and the pulse signal of the frequency $f_3$ is sent, for example, over a channel CH10.

Optionally, energy or transmit power of a modulation symbol may be related to a value of K. For example, a larger value of K indicates larger energy or transmit power of the modulation symbol, so that impact on demodulation performance can be reduced. For example, energy or transmit power of the first modulation symbol is K*P. P is energy or power of a pulse signal of one frequency. It may be understood as that if the first modulation symbol includes a pulse signal of one frequency, that is, K=1, the transmit power of the first modulation symbol is, for example, P. For example, P is greater than 0 and less than or equal to a first threshold, and the first threshold may be determined based on a maximum power spectral density constraint and a bandwidth of the pulse signal of the frequency. For example, if the maximum power spectral density of a UWB frequency band is -41.3 dBm/MHz, and the bandwidth of the pulse signal is 500 MHz, the first threshold is $-41.3 + 10 * log_{10}500 = -14.3$ dBm. In addition, energy or transmit power of the pulse signals of the K frequencies is equal, and is P.

Alternatively, in the pulse signals of the K frequencies, if energy or transmit power of pulse signals of different frequencies is not equal, energy (or transmit power) of one modulation symbol may be equal to a sum of the energy (or transmit power) of the pulse signals of the K frequencies. For example, if M=2, and transmit power of pulse signals of the two frequencies are $P_1$ and $P_2$ respectively, the transmit power of the first modulation symbol is $P_1+P_2$. In other words, total transmit power (or total energy) of a modulation symbol increases as a quantity of frequencies corresponding to pulse signals increases. Therefore, compared with single-carrier OOK modulation, transmit power (or energy) corresponding to one bit in embodiments of this application is not reduced, and the demodulation performance is not affected.

Optionally, before S501, the sending device may determine the modulation scheme. For example, the sending device may determine the modulation scheme based on experience information, where the experience information may include a parameter for historical communication between the sending device and the receiving device; or the sending device may determine the modulation scheme based on other information. The other information includes, for example, one or more of the following: capability information of a sending device, capability information of a receiving device, or auxiliary information. The auxiliary information is, for example, from the receiving device, or may be obtained in another manner. For example, the auxiliary information is from the receiving device. Before S501, the method may further include S502: The receiving device sends the auxiliary information to the sending device, and correspondingly, the sending device receives the auxiliary information from the receiving device. The auxiliary information may also have another name, for example, first indication information. This is not limited herein. For example, the auxiliary information may include (or indicate) one or more of the following: a frequency component (or frequency supported by the receiving device for demodulation) supported by the receiving device for demodulation, a recommended (or expected) modulation order or a value of M, a recommended (or expected) symbol rate, a recommended (or expected) data rate (for example, a recommended peak data rate), recommended (or expected) duty cycle information, multipath delay spread information, or channel state information (channel state information, CSI).

The frequency supported by the receiving device for demodulation may be replaced with a carrier component (or carrier) supported by the receiving device for demodulation, or may be replaced with a channel supported by the receiving device for demodulation, or the like. The frequency supported by the receiving device for demodulation may be understood as a center frequency of a pulse signal supported by the receiving device for demodulation. For example, if the modulation order (or recommended value of M) recommended by the receiving device is 2, the frequency supported by the receiving device for demodulation includes, for example, the frequency $f_1$ and the frequency $f_2$ . For another example, if the modulation order (or recommended value of M) recommended by the receiving device is 3, the frequency supported by the receiving device for demodulation includes, for example, the frequency $f_1$, the frequency $f_2$, and the frequency $f_3$.

The duty cycle information may be used to determine one or more of the following: duration of the first modulation symbol, a value of M, or a transmission rate of the first data. For example, the duty cycle information may be used to determine a symbol rate and/or a modulation order, thereby determining duration and/or a value of M of a modulation symbol accordingly. The symbol rate may be understood as the transmission rate of the modulation symbol. For another example, the duty cycle information may also be used to determine a data rate, thereby further determining duration and/or a modulation order of a modulation symbol based on the data rate. The data rate is, for example, the transmission rate of the first data. The duty cycle information recommended by the receiving device may be determined by the receiving device based on factors such as expected receiving power consumption and peak receiving power consumption. The expected receiving power consumption of the receiving device may be less than or equal to the peak receiving power consumption. For example, if the peak receiving power consumption is $P_{r,max}$, and the expected receiving power consumption is $P_{r,0}$, the recommended duty cycle (for example, represented by DC) determined by the receiving device may be less than or equal to $P_{r,0}/P_{r,max}$. For example, if DC=50%, it may be understood that the receiving device uses 50% of time to perform receiving (the receiving power consumption is

$P_{r,max}$), and the receiving device sleeps and does not perform receiving (the receiving power consumption may be ignored) in remaining 50% of the time, and average receiving power consumption of the receiving device is $P_{r,max}/2$.

The recommended symbol rate may be used to determine duration of a modulation symbol.

The data rate may be understood as a data transmission rate. The recommended data rate may be used to determine a symbol rate and/or a modulation order, thereby determining duration and/or a value of M of a modulation symbol accordingly.

The multipath delay spread information may be used to determine a symbol rate, thereby determining duration of a modulation symbol accordingly.

An implementation of the auxiliary information is not limited in embodiments of this application. For example, for the duty cycle information, the auxiliary information may include the duty cycle information recommended by the receiving device, or the duty cycle may be divided into at least one duty cycle range in advance. One duty cycle range includes one or more duty cycles, and each duty cycle range may correspond to one index. **In** this case, the auxiliary information may also include an index of the duty cycle range. Implementations of the parameters such as the recommended data rate, the recommended symbol rate, and the multipath delay spread information may be similar to the implementation of the recommended duty cycle.

For example, Table 1 is an example of the duty cycle range.

Table 1

| Index | Duty cycle |
|-------|------------|
| 0 | 0≤x<10% |
| 1 | 10%≤x<20% |
| 2 | 20%≤x<30% |
| 3 | 30%≤x<40% |
| 4 | 40%≤x<50% |
| 5 | 50%≤x<60% |
| 6 | 60%≤x<70% |
| 7 | 70%≤x<80% |
| 8 | 80%≤x<90% |
| 9 | 90%≤x≤100% |

x represents the duty cycle. Each row in Table 1 represents a duty cycle range, and an index of a row represents an index of the duty cycle range. For example, the at least one duty cycle range obtained through division in embodiments of this application may include one or more rows in Table 1, or the duty cycle range may be obtained through division in another manner instead of being obtained according to Table 1.

Table 2 is an example of multipath delay spread ranges.

Table 2

| Index | Multipath delay spread (nanosecond) |
|-------|-------------------------------------|
| 0 | 0≤y<10 |
| 1 | 10≤y<20 |
| 2 | 20≤y<30 |
| 3 | 30≤y<40 |
| 4 | 40≤y<50 |
| 5 | 50≤y<60 |
| 6 | 60≤y<70 |
| 7 | 70≤y<80 |
| 8 | 80≤y<90 |
| 9 | 90≤y≤100 |
| 10 | 100≤y<110 |
| 11 | 110≤y<120 |
| 12 | 120≤y<130 |
| 13 | 130≤y<140 |
| 14 | 140≤y<150 |
| 15 | 150≤y<160 |
| 16 | 160≤y<170 |
| 17 | 170≤y<180 |
| 18 | 180≤y<190 |
| 19 | 190≤y≤200 |
| 20 | y>200 |

y represents the multipath delay spread. Each row in Table 2 represents a multipath delay spread range, and an index of a row represents an index of the multipath delay spread range. For example, the multipath delay spread range obtained through division in embodiments of this application may include one or more rows in Table 2, or the multipath delay spread range may be obtained through division in another manner instead of being obtained according to Table 2.

For example, the auxiliary information includes the recommended duty cycle information and the multipath delay spread information. The sending device may determine a peak data rate based on the duty cycle information recommended by the receiving device and a data rate required by a first service, where the first service is, for example, a service to which the first data belongs. For example, if the recommended duty cycle DC=50%, and the data rate required by the first service is 20 Mbps, the peak data rate determined by the sending device may be greater than or equal to 40 Mbps. **In** addition, the multipath delay spread information indicates, for example, a maximum multipath delay spread. The sending device may determine a symbol rate based on the multipath delay spread information. For example, a guard interval between two adjacent modulation symbols should be greater than or equal to the maximum multipath delay spread, and the sending device may determine the symbol rate based on the guard interval. The sending device may determine a modulation order based on the peak data rate and the symbol rate, or determine a value of M. For example, if the peak data rate is greater than or equal to 40 Mbps and the symbol rate is 20 MHz, the modulation order should be greater than or equal to 2.

Alternatively, the auxiliary information may include the recommended data rate, the recommended symbol rate, or the recommended modulation order, and the sending device may directly obtain these parameters without performing calculation based on the duty cycle information and the multipath delay spread information.

Alternatively, the auxiliary information may include the channel state information, and the sending device may determine the data rate (for example, the peak data rate) and/or a channel coding rate based on the channel state information, and then determine the modulation order with reference to another parameter (for example, the multipath delay spread information or the symbol rate).

As described above, the information used by the sending device to determine the modulation scheme may further include the capability information of the sending device and/or the capability information of the receiving device. The sending device may determine the capability information of the sending device. The capability information of the receiving device may be obtained from the receiving device, or may be obtained in another manner, for example, from a core network. For example, the sending device obtains the capability information of the receiving device from the receiving device. Before S501, the method may further include S503: The receiving device sends the capability information of the receiving device to the sending device. Correspondingly, the sending device receives the capability information of the receiving device. S502 and S503 may be a same step. For example, the receiving device may send the auxiliary information and the capability information of the receiving device to the sending device by using one message. Alternatively, S502 and S503 may be different steps. In this case, S502 may be performed before S503, S502 may be performed after S503, or S502 and S503 may be simultaneously performed.

The capability information of the receiving device includes, for example, a maximum modulation order supported by the receiving device, and/or a channel, a carrier, or a frequency supported by the receiving device for demodulation at the maximum modulation order. For example, the capability information of the receiving device indicates that the maximum modulation order supported by the receiving device is 3, and at the modulation order 3, the channels supported by the receiving device for demodulation are respectively CH8, CH9, and CH10. Content included in the capability information of the sending device is also similar. Details are not described again.

For example, the sending device may determine, based on the capability information of the sending device and the capability information of the receiving device, a modulation scheme jointly supported by the sending device and the receiving device. For example, if the sending device supports joint modulation and demodulation over the three channels: CH8, CH9, and CH10, and the receiving device supports joint modulation and demodulation over the two channels: CH8 and CH10, the sending device may determine that the maximum modulation order that can be supported when the sending device communicates with the receiving device is M=2, and the sending device and the receiving device may perform joint modulation and demodulation over the two channels: CH8 and CH10. Optionally, if the sending device further receives the auxiliary information, the sending device may determine, with reference to the auxiliary information, the modulation scheme applied to embodiments of this application.

Optionally, the sending device may further send the capability information of the sending device to the receiving device. For example, before S501, the method further includes S504: The sending device sends the capability information of the sending device to the receiving device. Correspondingly, the receiving device receives the capability information of the sending device, so that the receiving device can also learn of the capability of the sending device. For example, S504 may be performed before S502, and when determining the auxiliary information, the receiving device may use the capability information of the sending device as a reference; or S504 may be performed after S502. In addition, S504 may be performed before S503, may be performed after S503, or may be simultaneously performed with S503.

S505: The sending device sends the first UWB frame. Correspondingly, the receiving device receives the first UWB frame from the sending device. The first UWB frame may include the one or more modulation symbols, and the sending device may send the modulation symbols in a similar manner. Therefore, the following uses an example in which the sending device sends the first modulation symbol.

In embodiments of this application, the first modulation symbol may include the pulse signals of the K frequencies, and the pulse signals of the K frequencies may be simultaneously sent, or sending time of the pulse signals of the K frequencies may be different. The following separately describes the two cases.

1. The pulse signals of the K frequencies are simultaneously sent. For example, in FIG. 6 and FIG. 7, that the pulse signals of the K frequencies are simultaneously sent is used as an example. In the diagram of the time domain in FIG. 6 or FIG. 7, time domain start positions of the pulse signals of the K frequencies are consistent.

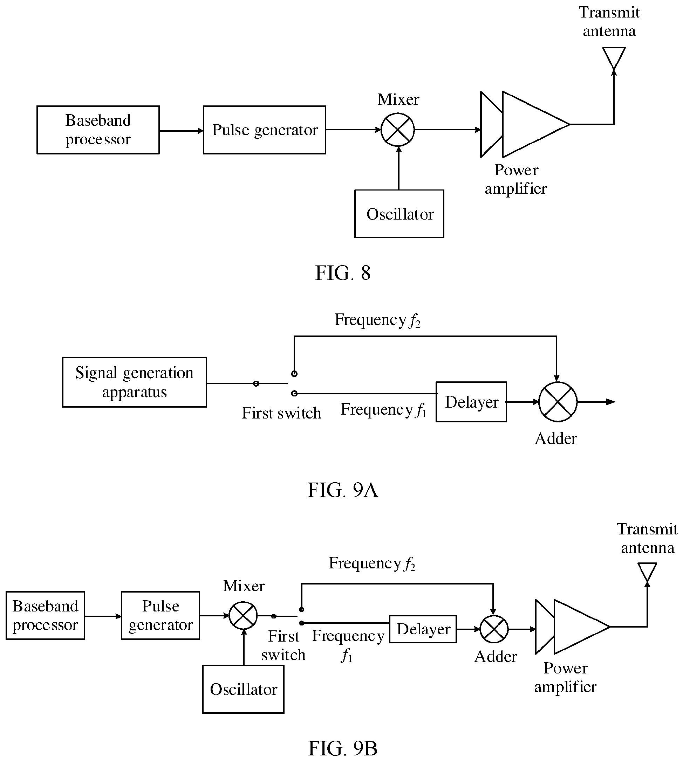

For a structure of a conventional sending device, refer to FIG. 8. The sending device may include a baseband processor, a pulse generator, an oscillator, a mixer, a power amplifier, and the like. The oscillator may generate a high-frequency carrier signal. A baseband signal generated by the baseband processor arrives at the pulse generator. The pulse generator may process the baseband signal into a baseband pulse signal. The baseband pulse signal and the high-frequency carrier signal generated by the oscillator enter the mixer, and the mixer processes the two types of signals to obtain a radio frequency signal. The sending device may send the radio frequency signal. The radio frequency signal is, for example, the UWB frame, understood as the modulation symbol, or understood as the pulse signal. It can be learned from the foregoing descriptions that, to support the modulation scheme in embodiments of this application, the sending device may generate the plurality of pulse signals of different frequencies. In this case, in embodiments of this application, the structure of the sending device shown in FIG. 8 may be improved.

In a direct improvement manner, the sending device may include M oscillators and M mixers, and the M oscillators one-to-one correspond to the M mixers. Different oscillators may generate carrier signals of different frequencies. A mixer corresponding to one oscillator may obtain a pulse signal of one frequency based on a baseband pulse signal and a carrier signal generated by the oscillator. In this case, pulse signals of M frequencies can be obtained via the M oscillators and the M mixers. However, power consumption of the oscillator is usually high, and adding the oscillator and the mixer also increases costs of the sending device. To maintain low costs and power consumption, embodiments of this application provide another improvement manner. In this improvement manner, the sending device may still include one oscillator and one mixer, and components such as a delayer and an adder are added to the sending device, so that the sending device can implement the modulation scheme provided in embodiments of this application.

For example, the sending device may include a signal generation apparatus, an adder, and a delayer. The delayer is connected between the signal generation apparatus and the adder. M duration may be divided, and the M duration may correspond to the M bits (for example, the M duration one-to-one corresponds to the M bits), and the M duration may also correspond to the M frequencies (for example, the M duration one-to-one corresponds to the M frequencies). Different duration in the M duration may be equal. For example, the duration is time of actually sending a pulse signal in duration of one modulation symbol. It is assumed that one modulation symbol includes N contiguous pulse signals, and duration of each pulse signal is $T_p$. In this case, time of actually sending the pulse signal in duration of the modulation symbol is $NT_p$, and any duration in the M duration is, for example, $NT_p$.

The sending device modulates the first data. In an implementation, i is an integer from 1 to M. If a value of a bit corresponding to $i^{th}$ duration in the M duration is the second value, the signal generation apparatus may generate a pulse signal of an $i^{th}$ frequency in the M frequencies in the $i^{th}$ duration; or if a value of a bit corresponding to $i^{th}$ duration in the M duration is the first value, the signal generation apparatus may not generate a pulse signal of an $i^{th}$ frequency in the M frequencies in the $i^{th}$ duration. Pulse signals output by the signal generation apparatus in the M duration may be delayed via the delayer. For example, the delayer may delay a pulse signal output by the signal generation apparatus in at least M-1 duration in the M duration, so that the pulse signals output in the M duration can simultaneously arrive at the adder, or the pulse signals output in the M duration can arrive at the adder in same duration. The signal generation apparatus may output the pulse signals of the K frequencies in the M duration. The pulse signals of the K frequencies may be output in K duration in the M duration, and the signal generation apparatus does not generate a pulse signal of a corresponding frequency in M-K duration. The adder may obtain the first modulation symbol based on the pulse signals (namely, the pulse signals of the K frequencies) that simultaneously arrive at the adder. It can be learned that, by adding the delayer, the pulse signals of the K frequencies can simultaneously arrive at the adder, so that the pulse signals of the K frequencies can be simultaneously sent, and a transmission delay of the UWB frame can be reduced.

Optionally, a quantity of delayers included in the sending device may be M-1, that is, the delayer described above may include M-1 delayers. For example, there are M paths between the signal generation apparatus and the adder, and the M paths correspond to the M duration and also correspond to the M frequencies. On M-1 paths, the delayer is connected between the signal generation apparatus and the adder, and there is no delayer on a remaining one path. Therefore, the M-1 delayers may delay pulse signals (namely, the pulse signal output in the M-1 duration) output by the signal generation apparatus through the M-1 paths. Delay duration of different delayers may be different. For example, delay duration of an $i^{th}$ delayer in the M-1 delayers is $T*(M-i)+\delta i$, T indicates any duration in the M duration, for example, T= $NT_p$, and $\delta_i$ is a constant. Optionally, the quantity of delayers included in the sending device may be M, that is, the delayer described above may include M delayers, provided that it is ensured that the plurality of pulse signals output in the M duration can simultaneously arrive at the adder.

M=2 is used as an example. FIG. 9A is a diagram of a structure of a sending device. The sending device includes a signal generation apparatus, an adder, and one delayer. Optionally, the sending device may further include a first switch. For a path with the delayer, the first switch is connected between a mixer and the delayer. For a path without the delayer, the first switch is connected between the mixer and the adder. The first switch may control the signal generation apparatus to be connected to a delayer, or to be connected to the adder. For example, the first switch is a single-pole multi-throw switch. For example, if M=2, the first switch may be a single-pole double-throw switch; or if M=3, the first switch may be a single-pole triple-throw switch. In FIG. 9A, M=2 is used as an example. Therefore, an example in which the first switch is a single-pole double-throw switch is also used. In addition, the sending device may further include a power amplifier, a transmit antenna, and the like. This is not limited.

Optionally, the signal generation apparatus may include one or more of the following: a baseband processor, a pulse generator, an oscillator, or a mixer. For example, the signal generation apparatus includes the pulse generator, the oscillator, and the mixer (or includes the baseband processor, the pulse generator, the oscillator, and the mixer). In this case, the signal generation apparatus generates a pulse signal of an $i^{th}$ frequency in $i^{th}$ duration. An implementation is that the oscillator generates an $i^{th}$ carrier signal in the $i^{th}$ duration, and the mixer obtains the pulse signal of the $i^{th}$ frequency based on the $i^{th}$ carrier signal and a baseband pulse signal from the pulse generator. Alternatively, the signal generation apparatus includes the pulse generator (or includes the baseband processor and the pulse generator), but does not include the oscillator and the mixer. In this case, the signal generation apparatus generates a pulse signal of an $i^{th}$ frequency in $i^{th}$ duration. For example, an implementation is that the pulse generator generates a pulse signal of an $i^{th}$ frequency in the $i^{th}$ duration. Alternatively, the signal generation apparatus includes the oscillator, but does not include the baseband processor, the pulse generator, and the mixer. In this case, the signal generation apparatus generates a pulse signal of an $i^{th}$ frequency in $i^{th}$ duration. For example, an implementation is that the oscillator generates a pulse signal of an $i^{th}$ frequency in the $i^{th}$ duration.

For example, the signal generation apparatus includes the baseband processor, the pulse generator, the oscillator, and the mixer. FIG. 9B is a diagram of another structure of the sending device. If the signal generation apparatus includes the baseband processor and the pulse generator, but does not include the oscillator and the mixer, the pulse generator may be connected to the first switch; or if the signal generation apparatus includes the oscillator, but does not include the baseband processor, the pulse generator, and the mixer, the oscillator may be connected to the first switch.

It is assumed that the first modulation symbol includes N contiguous pulse signals, and duration of each pulse signal is $T_p$. In this case, time of actually sending the pulse signal in duration of the modulation

symbol is $NT_p$. The N pulse signals may include pulse signals of K frequencies. For example, first duration in the M duration is a time range $t \sim t + NT_p$. In the first duration, the oscillator may generate a carrier signal of an oscillation frequency $f_1$, and in the first duration, the first switch is switched to the path with the delayer, where delay duration of the delayer is $\tau = NT_p + \delta$, and $\delta \geq 0$. Second duration in the M duration is a time range $t + NT_p + \delta \sim t + 2NT_p + \delta$. In the second duration, the oscillator may generate a carrier signal of an oscillation frequency $f_2$, and in the second duration, the first switch is switched to the path without the delayer. The signal generation apparatus obtains a pulse signal of a frequency $f_1$ based on the carrier signal of the oscillation frequency $f_1$, and after the pulse signal is delayed by the delayer, a corresponding time range changes to $t + NT_p + \delta \sim t + 2NT_p + \delta$, that is, changes to the second duration. In the second duration, the signal generation apparatus obtains a pulse signal of a frequency $f_2$ based on the carrier signal of the oscillation frequency $f_2$. It can be learned that the pulse signal of the frequency $f_1$ can be aligned with the pulse signal of the frequency $f_2$ in terms of time, and can simultaneously (or in the same duration) arrive at the adder. Therefore, the sending device can simultaneously send the pulse signals of the two frequencies.

For example, if the values of the M bits are "00", no pulse signal is generated in the time range $t \sim t + NT_p$ and the time range $t + NT_p + \delta \sim t + 2NT_p + \delta$, and therefore, no pulse signal is sent. Alternatively, if the values of the M bits are "01", the pulse signal of the frequency $f_1$ is generated in the time range $t \sim t + NT_p$, and no pulse signal is generated in the time range $t + NT_p + \delta \sim t + 2NT_p + \delta$, and therefore, only the pulse signal of the frequency $f_1$ is obtained after the pulse signal passes through the adder, and output power of, for example, the pulse signal of the frequency $f_1$ passing through the power amplifier is P. Alternatively, if the values of the M bits are "10", no pulse signal is generated in the time range $t \sim t + NT_p$, and the pulse signal of the frequency $f_2$ is generated in the time range $t + NT_p + \delta \sim t + 2NT_p + \delta$, and therefore, only the pulse signal of the frequency $f_2$ is obtained after the pulse signal passes through the adder, and output power of, for example, the pulse signal of the frequency $f_2$ passing through the power amplifier is P. Alternatively, if the values of the M bits are "11", the pulse signal of the frequency $f_1$ is generated in the time range $t \sim t + NT_p$, and the pulse signal of the frequency $f_2$ is generated in the time range $t + NT_p + \delta \sim t + 2NT_p + \delta$, and therefore, the pulse signal of the frequency $f_1$ and the pulse signal of the frequency $f_2$ may be obtained after the pulse signal passes through the adder, and total output power of, for example, the pulse signals of the two frequencies passing through the power amplifier is 2P.

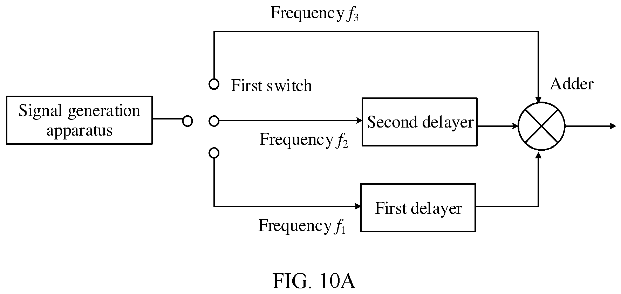

For example, M=3. FIG. 10A is a diagram of a structure of a sending device. The sending device includes a signal generation apparatus, an adder, and two delayers (a first delayer and a second delayer respectively). Optionally, the sending device may further include a first switch. In FIG. 10A, M=3 is used as an example. Therefore, an example in which the first switch is a single-pole triple-throw switch is also used. In addition, the sending device may further include a power amplifier, a transmit antenna, and the like. This is not limited.

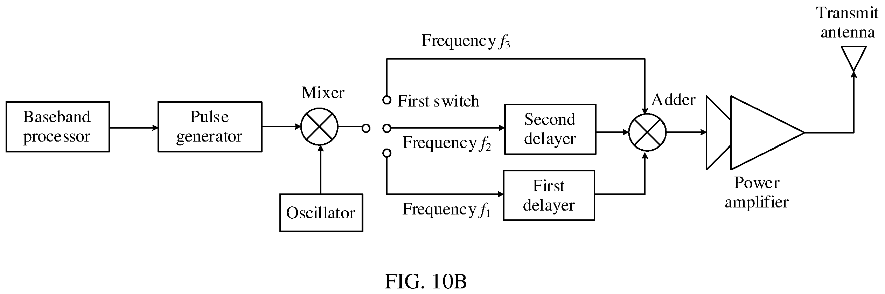

For example, the signal generation apparatus includes a baseband processor, a pulse generator, an oscillator, and a mixer. FIG. 10B is a diagram of another structure of the sending device. If the signal generation apparatus includes the baseband processor and the pulse generator, but does not include the oscillator and the mixer, the pulse generator may be connected to the first switch; or if the signal generation apparatus includes the oscillator, but does not include the baseband processor, the pulse generator, and the mixer, the oscillator may be connected to the first switch.

It is assumed that one modulation symbol includes N contiguous pulse signals, and duration of each pulse signal is $T_p$. In this case, time of actually sending the pulse signal in duration of the modulation symbol is $NT_p$. The N pulse signals may include pulse signals of K frequencies. For example, first duration is a time range $t~t + NT_p$. In the first duration, the oscillator may generate a carrier signal of an oscillation frequency $f_1$, and in the first duration, the first switch is switched to a path with the first delayer, where delay duration of the first delayer is second duration, for example, the delay duration of the first delayer is $\tau_1 = 2NT_p + \delta_1 + \delta_2, \delta_1 \geq 0$, and $\delta_2 \geq 0$. The second duration is a time range $t + NT_p + \delta_1~t + 2NT_p + \delta_1$. In the second duration, the oscillator may generate a carrier signal of an oscillation frequency $f_2$, and in the second duration, the first switch is switched to a path with the second delayer, where duration of the second delayer is the first duration, for example, the delay duration of the second delayer $\tau_1 = NT_p + \delta_2$. Third duration is a time range $t + 2NT_p + \delta_1 + \delta_2~t + 3NT_p + \delta_1 + \delta_2$. In the third duration, the oscillator may generate a carrier signal of an oscillation frequency $f_3$, and in the third duration, the first switch is switched to a path without the delayer. The signal generation apparatus obtains a pulse signal of a frequency $f_1$ based on the carrier signal of the oscillation frequency $f_1$, and after the pulse signal is delayed by the first delayer, a corresponding time range changes to $t + 2NT_p + \delta_1 + \delta_2~t + 3NT_p + \delta_1 + \delta_2$. The signal generation apparatus obtains a pulse signal of a frequency $f_2$ based on the carrier signal of the oscillation frequency $f_2$, and after the pulse signal is delayed by the second delayer, a corresponding time range also changes to $t + 2NT_p + \delta_1 + \delta_2~t + 3NT_p + \delta_1 + \delta_2$, that is, the two change ranges both change to the third duration. In the third duration, the signal generation apparatus obtains a pulse signal of a frequency $f_3$ based on the carrier signal of the oscillation frequency $f_3$. It can be learned that both the pulse signal of the frequency $f_1$ and the pulse signal of the frequency $f_2$ can be aligned with the pulse signal of the frequency $f_3$ in terms of time, and can simultaneously (or in the same duration) arrive at the adder. Therefore, the sending device can simultaneously send the pulse signals of the three frequencies.

For example, if the values of the M bits are "000", no pulse signal is generated in all the time ranges $t~t + NT_p, t + NT_p + \delta_1~t + 2NT_p + \delta_1$, and $t + 2NT_p + \delta_1 + \delta_2~t + 3NT_p + \delta_1 + \delta_2$, and therefore, no pulse signal is sent. Alternatively, if the values of the M bits are "001", the pulse signal of the frequency $f_1$ is generated in the time range $t~t + NT_p$, and no pulse signal is generated in both the time ranges $t + NT_p + \delta_1~t + 2NT_p + \delta_1$ and $t + 2NT_p + \delta_1 + \delta_2~t + 3NT_p + \delta_1 + \delta_2$, and therefore, only the pulse signal of the frequency $f_1$ is obtained after the pulse signal passes through the adder, and output power of, for example, the pulse signal of the frequency $f_1$ passing through the power amplifier is P. Alternatively, if the values of the M bits are "010", no pulse signal is generated in the time range $t~t + NT_p$, the pulse signal of the frequency $f_2$ is generated in the time range $t + NT_p + \delta_1~t + 2NT_p + \delta_1$, and no pulse signal is generated in the time range $t + 2NT_p + \delta_1 + \delta_2~t + 3NT_p + \delta_1 + \delta_2$ either, and therefore, only the pulse signal of the frequency $f_2$ is obtained after the pulse signal passes through the adder, and output power of, for example, the pulse signal of the frequency $f_2$ passing through the power amplifier is P. Alternatively, if the values of the M bits are "100", no pulse signal is generated in the time range $t~t + NT_p$, no pulse signal is generated in the time range $t + NT_p + \delta_1~t + 2NT_p + \delta_1$ either, and the pulse signal of the frequency $f_3$ is generated in the time range $t + 2NT_p + \delta_1 + \delta_2~t + 3NT_p + \delta_1 + \delta_2$, and therefore, only the pulse signal of the frequency $f_3$ is obtained after the pulse signal passes through the adder, and output power of, for example, the pulse signal of the frequency $f_3$ passing through the power amplifier is P. Alternatively, if the values of the M bits are "011", the pulse signal of the frequency $f_1$ is generated in the time range $t~t + NT_p$, the pulse signal of the frequency $f_2$ is generated in the time range $t + NT_p + \delta_1$-$t + 2NT_p + \delta_1$, and no pulse signal is generated in the time range $t + 2NT_p + \delta_1 + \delta_2~t + 3NT_p + \delta_1 + \delta_2$, and therefore, the pulse signal of the frequency $f_1$ and the pulse signal of the frequency $f_2$ are obtained after the pulse signal passes through the adder, and total output power of, for example, the pulse signal of the frequency $f_1$ and the pulse signal of the frequency $f_2$ that pass through the power amplifier is 2P. Alternatively, if the values of the M bits are "101", the pulse signal of the frequency $f_1$ is generated in the time range $t~t + NT_p$, no pulse signal is generated in the time range $t + NT_p + \delta_1~t + 2NT_p + \delta_1$, and the pulse signal of the frequency $f_3$ is generated in the time range $t + 2NT_p + \delta_1 + \delta_2~t + 3NT_p + \delta_1 + \delta_2$, and therefore, the pulse signal of the frequency $f_1$ and the pulse signal of the frequency $f_3$ are obtained after the pulse signal passes through the adder, and total output power of, for example, the pulse signal of the frequency $f_1$ and the pulse signal of the frequency $f_3$ that pass through the power amplifier is 2P. Alternatively, if the values of the M bits are "110", no pulse signal is generated in the time range $t~t + NT_p$, the pulse signal of the frequency $f_2$ is generated in the time range $t + NT_p + \delta_1$-$t + 2NT_p + \delta_1$, and

the pulse signal of the frequency $f_3$ is generated in the time range $t + 2NT_p + \delta_1 + \delta_2 \sim t + 3NT_p + \delta_1 + \delta_2$, and therefore, the pulse signal of the frequency $f_2$ and the pulse signal of the frequency $f_3$ are obtained after the pulse signal passes through the adder, and total output power of, for example, the pulse signal of the frequency $f_2$ and the pulse signal of the frequency $f_3$ that pass through the power amplifier is 2P. Alternatively, if the values of the M bits are "111", the pulse signal of the frequency $f_1$ is generated in the time range $t \sim t + NT_p$, the pulse signal of the frequency $f_2$ is generated in the time range $t + NT_p + \delta_1 \sim t + 2NT_p + \delta_1$, and the pulse signal of the frequency $f_3$ is generated in the time range $t + 2NT_p + \delta_1 + \delta_2 \sim t + 3NT_p + \delta_1 + \delta_2$, and therefore, the pulse signal of the frequency $f_1$, the pulse signal of the frequency $f_2$, and the pulse signal of the frequency $f_3$ are obtained after the pulse signal passes through the adder, and total output power of, for example, the pulse signal of the frequency $f_1$, the pulse signal of the frequency $f_2$, and the pulse signal of the frequency $f_3$ that pass through the power amplifier is 3P.

2. The sending time of the pulse signals of the K frequencies is different. For example, in the pulse signals of the K frequencies, sending time of the pulse signals of the different frequencies is different. Regardless of whether the sending time of the pulse signals of the K frequencies is the same or different, the pulse signals of the K frequencies are all in duration of one modulation symbol in time domain.

Optionally, a minimum sending time interval between pulse signals of adjacent sending frequencies is $t_0$. For example, in the pulse signals of the K frequencies, the sending device first sends a pulse signal of a frequency $f_1$, and then sends a pulse signal of a frequency $f_2$. In this case, a sending time difference between the pulse signals of the two frequencies is, for example, $t_0$, where the sending time difference is, for example, a time difference between start time domain locations of the pulse signals of the two frequencies, and $t_0 \geq 0$. $t_0$ is, for example, predefined (for example, predefined by a protocol or predefined by a manufacturer of the UWB device), may be determined by the sending device and the receiving device through negotiation, may be configured by the sending device and indicated to the receiving device, or may be configured by the receiving device and indicated to the sending device. A unit of $t_0$ is, for example, second (s), millisecond (ms), microsecond (μs), or nanosecond (ns), or may be pulse duration $T_p$ (that is, duration of $t_0$ is equal to an integer multiple of $T_p$).

In an optional implementation, the sending device may include a signal generation apparatus. M duration may be divided, and the M duration may correspond to the M bits (for example, the M duration one-to-one corresponds to the M bits), and the M duration may also correspond to the M frequencies (for example, the M duration one-to-one corresponds to the M frequencies). Different duration in the M duration may be equal. For the duration, refer to the foregoing descriptions of the M duration. The sending device modulates the first data. In an implementation, i is an integer from 1 to M. If a value of a bit corresponding to $i^{th}$ duration in the M duration is the second value, the signal generation apparatus may generate a pulse signal of an $i^{th}$ frequency in the M frequencies in the $i^{th}$ duration; or if a value of a bit corresponding to $i^{th}$ duration in the M duration is the first value, the signal generation apparatus may not generate a pulse signal of an $i^{th}$ frequency in the M frequencies in the $i^{th}$ duration. The signal generation apparatus may output the pulse signals of the K frequencies in the M duration. The pulse signals of the K frequencies may be output in K duration in the M duration, and the signal generation apparatus does not generate a pulse signal of a corresponding frequency in M-K duration. It can be learned that, in this manner, the pulse signals of the K frequencies can be sent in a time division manner.

For example, the signal generation apparatus may include a baseband processor, a pulse generator, a mixer, and an oscillator (or the signal generation apparatus includes a pulse generator, a mixer, and an oscillator). In this case, it may be considered that the structure of the sending device is not changed. For example, for the structure of the sending device, still refer to FIG. 8. In FIG. 8, an example in which the signal generation apparatus includes the baseband processor, the pulse generator, the mixer, and the oscillator is used. In this case, the signal generation apparatus generates the pulse signal of the $i^{th}$ frequency in the $i^{th}$ duration. In an implementation, the pulse generator generates a baseband pulse signal in the $i^{th}$ duration, the oscillator generates an $i^{th}$ carrier signal in the $i^{th}$ duration, and the mixer may obtain the pulse signal of the $i^{th}$ frequency based on the baseband pulse signal and the $i^{th}$ carrier signal. If the value of the bit corresponding to the $i^{th}$ duration in the M duration is the first value, the signal generation apparatus may not generate the pulse signal of the $i^{th}$ frequency in the M frequencies in the $i^{th}$ duration. For example, in an implementation, the pulse generator still generates the baseband pulse signal in the $i^{th}$ duration, but the oscillator does not generate the $i^{th}$ carrier signal in the $i^{th}$ duration. Therefore, the mixer does not perform frequency mixing, and cannot obtain the pulse signal of the $i^{th}$ frequency, and the baseband pulse signal is not sent either. Alternatively, the pulse generator does not generate the baseband pulse signal in the $i^{th}$ duration. Therefore, the pulse signal of the $i^{th}$ frequency cannot be obtained, and the pulse signal of the $i^{th}$ frequency is not sent either.

Alternatively, the signal generation apparatus may include the pulse generator (or include the baseband processor and the pulse generator), but does not include the oscillator and the mixer. In this case, the signal generation apparatus generates the pulse signal of the $i^{th}$ frequency in the $i^{th}$ duration. In an implementation, the pulse generator generates the pulse signal of the $i^{th}$ frequency in the $i^{th}$ duration. For example, the pulse generator may process a baseband signal from the baseband processor to obtain the pulse signal of the $i^{th}$ frequency.

Alternatively, the signal generation apparatus may include the oscillator (or include the baseband processor and the oscillator), but does not include the pulse generator and the mixer. In this case, the signal generation apparatus generates the pulse signal of the $i^{th}$ frequency in the $i^{th}$ duration. In an implementation, the oscillator generates the pulse signal of the $i^{th}$ frequency in the $i^{th}$ duration. For example, the oscillator may process the baseband signal from the baseband processor, to obtain the pulse signal of the $i^{th}$ frequency.

Optionally, if the sending device is implemented in the foregoing manner, a clock frequency of the sending device may be adjusted. For example, the clock frequency of the sending device may be adjusted based on $t_0$, so that the clock frequency is greater than or equal to a first frequency. In this way, the signal generation apparatus can generate the pulse signals of the K frequencies based on an interval of $t_0$. For example, a reciprocal of the first frequency is $t_0$, and the first frequency may be $1/t_0$. FIG. 8 is used as an example. If the values of the M bits are "11", the pulse generator may generate pulses in both time ranges $t\sim t + NT_p$ and $t + t_0\sim t + t_0 + NT_p$, and perform frequency mixing with carrier signals of different frequencies generated by the oscillator, to obtain pulse signals of two frequencies.

In another optional implementation, the sending device may include a pulse generator, a delayer, a mixer, and an oscillator. M duration may be divided. For the M duration, refer to the foregoing descriptions. The sending device modulates the first data. In an implementation, i is an integer from 1 to M, the pulse generator may generate a baseband pulse signal in $i^{th}$ duration in the M duration, and the delayer delays a baseband pulse signal output by the pulse generator in M-1 duration in the M duration, so that baseband pulse signals output in the M duration arrive at the mixer in a time division mode. If a value of a bit corresponding to the $i^{th}$ duration in the M duration is the second value, the oscillator may generate an $i^{th}$ carrier signal in the $i^{th}$ duration, and the mixer may obtain a pulse signal of an $i^{th}$ frequency based on the baseband pulse signal and the $i^{th}$ carrier signal; or if a value of a bit corresponding to the $i^{th}$ duration in the M duration is the first value, the oscillator may not generate the $i^{th}$ carrier signal in the $i^{th}$ duration, and therefore, a pulse signal of an $i^{th}$ frequency is not obtained. Therefore, a first modulation symbol is obtained.

Optionally, a quantity of delayers included in the sending device may be M-1, that is, the delayer described above may include M-1 delayers. For example, there may be M paths between the pulse generator and the mixer, and the M paths correspond to the M duration and also correspond to the M frequencies. On M-1 paths, a delayer may be connected between the pulse generator and the mixer, and there is no delayer on a remaining one path. Therefore, the M-1 delayers may delay baseband pulse signals (namely, the baseband pulse signal output in the M-1 duration) output by the pulse generator through the M-1 paths. Delay duration of different delayers may be different. For example, delay duration of an $m^{th}$ delayer in the M-1 delayers is, for example, m times $t_0$, where m is a positive integer less than or equal to M-1.

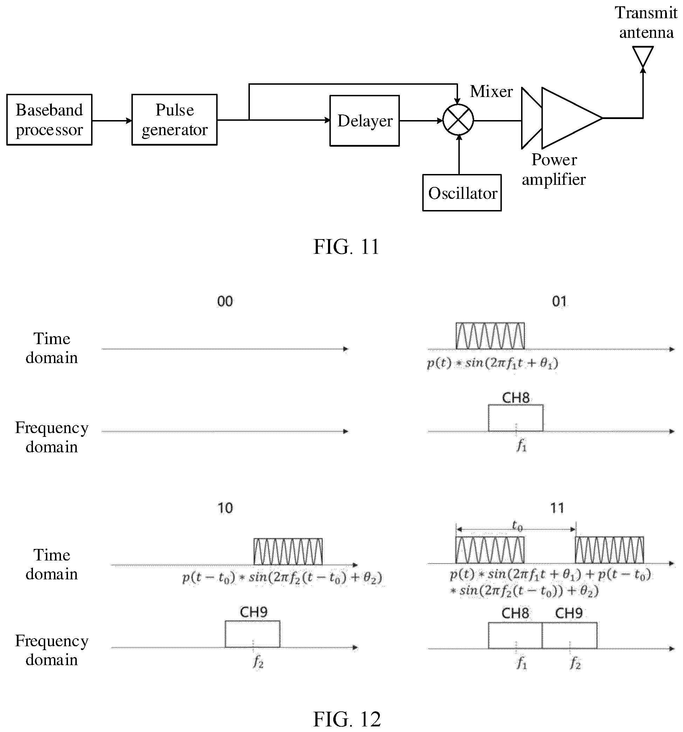

FIG. 11 is a diagram of a structure of the sending device. The sending device includes the pulse generator, the delayer, the mixer, and the oscillator. In FIG. 11, M=2 is used as an example. Therefore, the sending device includes one delayer. It is assumed that one modulation symbol includes N contiguous pulse signals, and duration of each pulse signal is $T_p$. In this case, time of actually sending the pulse signal in duration of the modulation symbol is $NT_p$. The N pulse signals may include pulse signals of K frequencies. For example, first duration is a time range $t\sim t + NT_p$, and in the first duration, the oscillator may generate a carrier signal of an oscillation frequency $f_1$. The pulse signal generated by the pulse generator is transmitted through both a path without the delayer and a path with the delayer. On the path without a delayer, the pulse signal generated by the pulse generator arrives at the mixer in the first duration. The mixer generates a pulse signal of a frequency $f_1$ based on the pulse signal and the carrier signal of the oscillation frequency $f_1$, and output power of, for example, the pulse signal of the frequency $f_1$ passing through a power amplifier is P. Second duration is a time range $t + NT_p + \delta\sim t + 2NT_p + \delta$, and in the second duration, the oscillator may generate a carrier signal of an oscillation frequency $f_2$. On the path with the delayer, the pulse signal generated by the pulse generator is delayed and arrives at the mixer in the second duration. The mixer generates a pulse signal of a frequency $f_2$ based on the pulse signal and the carrier signal of the oscillation frequency $f_2$, and output power of, for example, the pulse signal of the frequency $f_2$ passing through the power amplifier is P. It can be learned that the pulse signal of the frequency $f_1$ can be unaligned with the pulse signal of the frequency $f_2$ in terms of time, and the sending device can send the pulse signals of the two frequencies in the time division manner.

M=2 is used as an example. Refer to FIG. 12. A manner of sending the pulse signals of the K frequencies is described. A high-order bit corresponds to the frequency $f_2$, and the low-order bit corresponds to the frequency $f_1$. If the values of the M bits are "00", the pulse signals of the frequency $f_1$ and the frequency $f_2$ are not sent. It may be understood as that the first modulation symbol does not include the pulse signals of the frequency $f_1$ and the frequency $f_2$, and optionally, the first modulation symbol does not include a pulse signal of any frequency. If the values of the M bits are "01", the first modulation symbol may include one or more pulse signals of the frequency $f_1$, but does not include a pulse signal of the frequency $f_2$. In this case, the first modulation symbol may be represented as $p(t)*\sin(2\pi f_1 t+\theta_1)$. If the values of the M bits are "10", the first modulation symbol may include one or more pulse signals of the frequency $f_2$, but does not include a pulse signal of the frequency $f_1$. In this case, the first modulation symbol may be represented as $p(t-t_0)*\sin(2\pi f_2(t-t_0)+\theta_2)$. If the values of the M bits are "11", the first modulation symbol may include one or more pulse signals of the frequency $f_1$, and one or more pulse signals of the frequency $f_2$, and in duration of the first modulation symbol, a time offset between the two pulse signal groups of the different frequencies is $t_0$. In this case, the first modulation symbol may be represented as $p(t)*\sin(2\pi f_1 t+\theta_1)+p(t-t_0)*\sin(2\pi f_2(t-t_0)+\theta_2)$. For example, a range of the duration of the first modulation symbol is $T_1\sim T_2$, a sending time range of the pulse signal of the frequency $f_1$ included in the first modulation symbol is, for example, $T_3\sim T_3+NT_p$, and a sending time range of the pulse signal of the frequency $f_2$ included in the first modulation symbol is, for example, $T_3+t_0\sim T_3+t_0+NT_p$, where $T_1\le T_3<T_3+t_0+NT_p\le T_2$.

The foregoing describes a plurality of implementations of the sending device. In actual application, different implementations may be selected based on different situations, and this is flexible.

Optionally, the sending device may further indicate the modulation scheme to the receiving device, so that the receiving device can demodulate the first UWB frame based on a demodulation scheme corresponding to the modulation scheme. The sending device may indicate the modulation scheme to the receiving device, for example, by indicating a parameter corresponding to the modulation scheme. For example, the sending device may send second indication information to the receiving device, to indicate the modulation scheme, and the receiving device can determine the modulation scheme based on the second indication information. For example, the second indication information includes (or indicates) one or more of the following parameters: the M frequencies, the modulation order or the value of M, a symbol rate of the first data, a data rate of the first data, or a sending time difference (for example, a value of $t_0$) between pulse signals of any two adjacent sending frequencies in the pulse signals of the K frequencies when K=M.

As described above, the one or more modulation symbols may be located in the payload of the first UWB frame, and the payload of the first UWB frame is, for example, a physical payload (PHY payload) of the first UWB frame. For example, the first UWB frame further includes a physical header (PHY header, PHR) and/or a synchronization header (synchronization header, SHR). In this case, in an optional implementation, the second indication information may be included in a PHR and/or an SHR of a UWB frame. The SHR is mainly used for synchronization, channel estimation, ranging, or the like. The PHR mainly carries information used to decode the PHY payload.

When the PHY payload uses the modulation scheme provided in embodiments of this application, the SHR and/or the PHR may also be sent on M channels, or may be sent on only one of the M channels instead of being sent on all the M channels. In other words, when the PHY payload uses the modulation scheme provided in embodiments of this application, the SHR and/or the PHR may be sent by using the K frequencies, or may be sent by using only one of the M frequencies instead of using the K frequencies. In other words, when the PHY payload uses the modulation scheme provided in embodiments of this application, the SHR and/or the PHR may also use the modulation scheme, or may use another modulation scheme, for example, the OOK modulation scheme, to reduce overheads. The receiving device may receive a pulse signal of one of the M frequencies, and may obtain the SHR and/or the PHR of the UWB frame based on the pulse signal. The SHR of the UWB frame includes, for example, the SHR of the first UWB frame. The PHR of the UWB frame includes, for example, the PHR of the first UWB frame.

Alternatively, the first UWB frame may not include the second indication information, and the sending device and the receiving device may negotiate in advance a modulation scheme used for a PHY payload of a UWB frame in a next time period. For example, the sending device and the receiving device may negotiate to determine the modulation scheme. For example, the sending device and the receiving device may perform negotiation by using a UWB frame. The UWB frame may carry the second indication information, and the UWB frame is not the first UWB frame. For example, the UWB frame is referred to as a second UWB frame. For example, the second indication information may be carried in a PHR of the second UWB frame and/or a media access control (media access control, MAC) header of a PHY payload of the second UWB frame. In this case, for example, the sending device may send the second UWB frame before sending the first UWB frame.

Alternatively, the first UWB frame may not include the second indication information. The sending device and the receiving device may negotiate in advance a modulation scheme used for a PHY payload of a UWB frame in a next time period. Alternatively, the sending device and the receiving device may negotiate a modulation scheme by using a signal of another protocol other than a UWB protocol, for example, negotiate by using a frame of another type like a Bluetooth frame. In this case, the second indication information may be included in the Bluetooth frame or the frame of the another type.

Regardless of the foregoing manner in which the sending device sends the second indication information, optionally, the PHY payload of the frame (for example, the UWB frame) including the second indication information may use a predefined modulation scheme, for example, a protocol-predefined modulation scheme, so that the receiving device can demodulate the PHY payload of the frame without learning of the modulation scheme in embodiments of this application.

S506: The receiving device demodulates the first UWB frame to obtain the first data.

The receiving device may include M signal processing apparatuses. The M signal processing apparatuses one-to-one correspond to the M frequencies, and also one-to-one correspond to the M bits. The receiving device demodulates the first UWB frame. For example, in an implementation, the M signal processing apparatuses may separately process the first UWB frame, that is, each of the M signal processing apparatuses may process the first UWB frame, and each signal processing apparatus may determine a frequency of a pulse signal included in the first UWB frame. The receiving device may determine the first data based on frequencies of pulse signals determined by the M signal processing apparatuses.

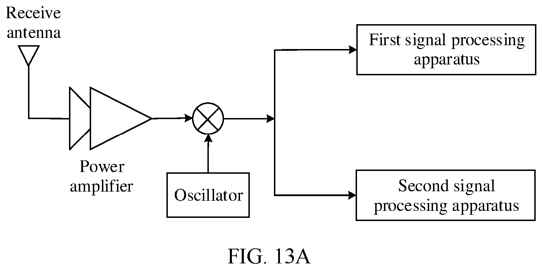

Optionally, the receiving device may further include a mixer and an oscillator. The M signal processing apparatuses are connected to the mixer, and are also connected to the oscillator. Refer to FIG. 13A. In FIG. 13A, M=2 is used as an example, and the M signal processing apparatuses are respectively a first signal processing apparatus and a second signal processing apparatus in FIG. 13A. The receiving device demodulates the first UWB frame. For example, in an implementation, the oscillator generates a first carrier signal, and the mixer performs frequency mixing on the first UWB frame and the first carrier signal to output a UWB signal. The M signal processing apparatuses may separately process the UWB signal, to determine a frequency of a pulse signal included in the first UWB frame. The receiving device may determine the first data based on frequencies of pulse signals determined by the M signal processing apparatuses.

For the receiving device, if K=0, it indicates that the value of each of the M bits is the first value, or it indicates that the values of the M bits belong to the first set; if K=M, it indicates that the value of each of the M bits is the second value, or it indicates that the values of the M bits belong to the second set; or if K is an integer less than M and greater than 0, it indicates that the M values corresponding to the M bits include the first value and the second value, or it indicates that the values of the M bits belong to the third set.

In addition, if the first modulation symbol does not include a pulse signal of a frequency corresponding to the first bit in the M bits, the receiving device may determine that the value of the first bit is the first value; or if the first modulation symbol includes a pulse signal of a frequency corresponding to the first bit in the M bits, the receiving device may determine that the value of the first bit is the second value. A similar manner may be used for all the M bits, so that the values of the M bits can be determined.

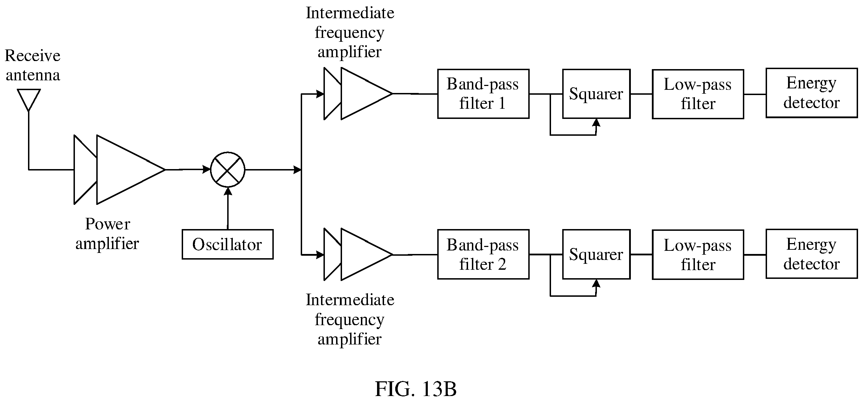

An example in which the receiving device detects the UWB signal in an energy detection manner is used. For example, a signal processing apparatus A in the M signal processing apparatuses may include an intermediate frequency amplifier, a band-pass filter, a squarer, a low-pass filter, and an energy detector. For this, refer to FIG. 13B. In FIG. 13B, M=2 is used as an example. If M is greater than 2, an implementation is similar. Alternatively, the signal processing apparatus A may include the band-pass filter, the squarer, the low-pass filter, and the energy detector. The energy detector may also be referred to as a baseband signal processor or the like, and a name is not limited. The signal processing apparatus A is, for example, any one of the M signal processing apparatuses. Optionally, the receiving device may further include components such as a receive antenna, a low noise amplifier, an oscillator, and a mixer. Such a receiving device is used as an example in FIG. 13B. Alternatively, the receiving device may not include components such as the low noise amplifier, the oscillator, and the mixer, and the received signal may directly reach the signal processing apparatus.

FIG. 13B is used as an example. After the first UWB frame received by the receiving device passes through the low noise amplifier, frequency mixing is performed, in the mixer, on the first UWB frame and the carrier signal generated by the oscillator. The first UWB frame includes, for example, the pulse signal of the frequency $f_1$ and the pulse signal of the frequency $f_2$, and a frequency of the carrier signal generated by the oscillator is $f_0$. A signal obtained through frequency mixing performed on the pulse signal of the frequency $f_1$ and the carrier signal of the frequency $f_0$ includes a component of a frequency $f_1' = |f_1 - f_0|$. The band-pass filter (represented as a band-pass filter 1 in FIG. 13B) of a center frequency $f_1'$ filters the signal of the frequency component $f_1'$ that has undergone intermediate frequency amplification, to obtain a signal of a frequency $f_1'$. The signal of the frequency $f_1'$ may be converted into a baseband signal via the squarer and the low-pass filter. The energy detector performs energy detection on the baseband signal, and may determine whether the received signal includes the signal of the frequency $f_1$ and/or the signal of the frequency $f_2$.

Similarly, a signal obtained through frequency mixing performed on the pulse signal of the frequency $f_2$ and the carrier signal of the frequency $f_0$ includes a component of a frequency $f_2' = |f_2 - f_0|$. The band-pass filter (represented as a band-pass filter 2 in FIG. 13B) of a center frequency $f_2'$ filters the signal of the frequency component $f_2'$ that has undergone intermediate frequency amplification, to obtain a signal of a frequency $f_2'$. The signal of the frequency $f_2'$ may be converted into a baseband signal via the squarer and the low-pass filter. The energy detector performs energy detection on the baseband signal, and may determine whether the received signal includes the signal of the frequency $f_1$ and/or the signal of the frequency $f_2$.

For example, if the received signal does not include the signal of the frequency $f_1$ and the signal of the frequency $f_2$, the receiving device determines that the values of the M bits are "00"; if the received signal includes the signal of the frequency $f_1$ but does not include the signal of the frequency $f_2$, the receiving device determines that values of the M bits are "01"; if the received signal does not include the signal of the frequency $f_1$ but includes the signal of the frequency $f_2$, the receiving device determines that the values of the M bits are "10"; or if the received signal includes the signal of the frequency $f_1$ and the signal of the frequency $f_2$, the receiving device determines that the values of the M bits are "11 ".

Optionally, the receiving device may further send feedback information to the sending device. The feedback information may indicate that the first data is successfully received or fails to be received, or indicate that the first data is successfully demodulated or fails to be demodulated. The feedback information is, for example, a hybrid automatic repeat request (hybrid automatic repeat request, HARQ)-acknowledgment (ACK).

In embodiments of this application, one modulation symbol may represent M bits, and M is greater than or equal to 2. This means that in embodiments of this application, a quantity of bits represented by one modulation symbol may be increased, and more data can be transmitted in a same time period, thereby improving a peak data rate of a UWB signal. In addition, the sending device can simultaneously send the pulse signals of the K frequencies, so that a data transmission delay can be reduced. Alternatively, the sending device can send the pulse signals of the K frequencies in the time division manner, so that the structure of the sending device can be simplified, and the costs can be reduced.

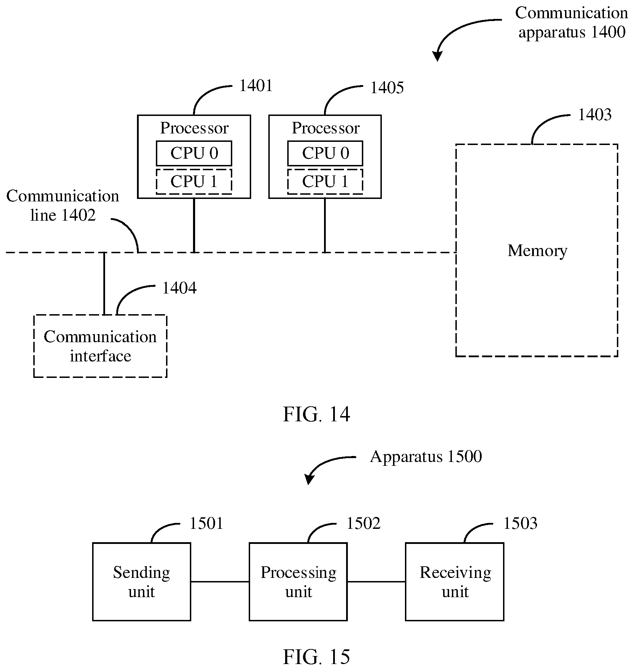

FIG. 14 is a diagram of a structure of a communication apparatus according to an embodiment of this application. The communication apparatus 1400 may be the sending device in the embodiment shown in FIG. 5 or a circuit system of the sending device, and is configured to implement the method corresponding to the sending device in the foregoing method embodiments. Alternatively, the communication apparatus 1400 may be the receiving device in the embodiment shown in FIG. 5 or a circuit system of the receiving device, and is configured to implement the method corresponding to the receiving device in the foregoing method embodiments. For specific functions, refer to the descriptions of the foregoing method embodiments. For example, a circuit system is a chip system.

The communication apparatus 1400 includes at least one processor 1401. The processor 1401 may be configured for internal processing of the apparatus, to implement a specific control processing function. Optionally, the processor 1401 includes instructions. Optionally, the processor 1401 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 1400 includes one or more memories 1403, configured to store instructions. Optionally, the memory 1403 may further store data. The processor and the memory may be separately disposed, or may be integrated together.

Optionally, the communication apparatus 1400 includes a communication line 1402 and at least one communication interface 1404. Because the memory 1403, the communication line 1402, and the communication interface 1404 are all optional, the memory 1403, the communication line 1402, and the communication interface 1404 are all indicated by dashed lines in FIG. 14.

Optionally, the communication apparatus 1400 may further include a transceiver machine and/or an antenna. The transceiver machine may be configured to: send information to another apparatus or receive information from another apparatus. The transceiver machine may be referred to as a transceiver, a transceiver circuit, an input/output interface, or the like, and is configured to implement a transceiver function of the communication apparatus 1400 via the antenna. Optionally, the transceiver machine includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 1401 may include a general-purpose central processing unit (central processing unit, CPU), a microprocessor, an application-specific integrated circuit (application-specific integrated circuit, ASIC), or one or more integrated circuits configured to control program execution in the solutions of this application.

The communication line 1402 may include a path for information transmission between the foregoing components.

The communication interface 1404 is any apparatus like a transceiver machine, and is configured to communicate with another device or a communication network like the Ethernet, a radio access network (radio access network, RAN), a wireless local area network (wireless local area network, WLAN), or a wired access network.

The memory 1403 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory 1403 may exist independently, and is connected to the processor 1401 through the communication line 1402. Alternatively, the memory 1403 may be integrated with the processor 1401.

The memory 1403 is configured to store computer-executable instructions for executing the solutions of this application, and the processor 1401 controls execution. The processor 1401 is configured to execute the computer-executable instructions stored in the memory 1403, to implement the communication methods provided in the foregoing embodiments of this application.

Optionally, the computer-executable instructions in embodiments of this application may also be referred to as application program code. This is not specifically limited in embodiments of this application.

During specific implementation, in an embodiment, the processor 1401 may include one or more CPUs such as a CPU 0 and a CPU 1 in FIG. 14.

During specific implementation, in an embodiment, the communication apparatus 1400 may include a plurality of processors such as the processor 1401 and a processor 1405 in FIG. 14. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 14 is a chip, for example, a chip of the sending device or a chip of the receiving device, the chip includes the processor 1401 (which may further include the processor 1405), the communication line 1402, and the communication interface 1404. Optionally, the chip may further include the memory 1403. For example, the communication interface 1404 may be an input interface, a pin, a circuit, or the like. The memory 1403 may be a register, a cache, or the like. The processor 1401 and the processor 1405 each may be a general-purpose CPU, a microprocessor, an ASIC, or one or more integrated circuits configured to control program execution of the method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, is merely logical function division, and may be other division in an actual implementation. For example, when each functional module is obtained through division based on each corresponding function, FIG. 15 is a diagram of an apparatus. The apparatus 1500 may be the sending device or the receiving device in the foregoing method embodiments, or a chip in the sending device or a chip in the receiving device. The apparatus 1500 includes a sending unit 1501, a processing unit 1502, and a receiving unit 1503.

It should be understood that the apparatus 1500 may be configured to implement steps performed by the sending device or the receiving device in the methods in embodiments of this application. For related features, refer to the foregoing embodiments. Details are not described herein again.

Optionally, functions/implementation processes of the sending unit 1501, the receiving unit 1503, and the processing unit 1502 in FIG. 15 may be implemented by the processor 1401 in FIG. 14 by invoking the computer-executable instructions stored in the memory 1403. Alternatively, a function/implementation process of the processing unit 1502 in FIG. 15 may be implemented by the processor 1401 in FIG. 14 by invoking the computer-executable instructions stored in the memory 1403, and functions/implementation processes of the sending unit 1501 and the receiving unit 1503 in FIG. 15 may be implemented through the communication interface 1404 in FIG. 14.

Optionally, when the apparatus 1500 is a chip or a circuit, functions/implementation processes of the sending unit 1501 and the receiving unit 1503 may alternatively be implemented through a pin, a circuit, or the like.

This application further provides a computer-readable storage medium. The computer-readable storage medium stores a computer program or instructions. When the computer program or the instructions are run, the method performed by the sending device or the receiving device in the foregoing method embodiments is implemented. In this way, the functions in the foregoing embodiments may be implemented in a form of a software functional unit and sold or used as an independent product. Based on such an understanding, the technical solutions of this application essentially, or the part that makes a contribution, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the sending device or the receiving device in any one of the foregoing method embodiments.

An embodiment of this application further provides a processing apparatus, including a processor and an interface. The processor is configured to perform the method performed by the sending device or the receiving device in any one of the foregoing method embodiments.

All or some of the foregoing embodiments may be implemented by software, hardware, firmware, or any combination thereof. When software is used to implement embodiments, all or some of the embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Various illustrative logic units and circuits described in embodiments of this application may implement or operate the described functions by designing a general-purpose processor, a digital signal processor (digital signal processor, DSP), an application-specific integrated circuit (application-specific integrated circuit, ASIC), a field-programmable gate array (field programmable gate array, FPGA) or another programmable logic apparatus, a discrete gate or transistor logic, a discrete hardware component, or any combination thereof. The general-purpose processor may be a microprocessor, or optionally, the general-purpose processor may be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to the processor, so that the processor may read information from the storage medium and write information into the storage medium. Optionally, the storage medium may be integrated into a processor. The processor and the storage medium may be disposed in an ASIC, and the ASIC may be disposed in a terminal device. Optionally, the processor and the storage medium may be disposed in different components of a terminal device.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Although embodiments of this application are described with reference to specific features and embodiments thereof, it is clear that various modifications and combinations may be made to embodiments of this application without departing from the scope of embodiments of this application. Correspondingly, embodiments of this application and the accompanying drawings are merely example descriptions of embodiments of this application defined by the appended claims, and are considered to cover any or all modifications, variations, combinations, or equivalents in the scope of embodiments of this application. It is clear that a person skilled in the art can make various modifications and variations to embodiments of this application without departing from the scope of embodiments of this application. **In** this way, embodiments of this application are also intended to cover these modifications and variations provided that they fall within the scope of the claims of embodiments of this application and equivalent technologies thereof.

**Claims**

1. A communication method, applied to a sending device, wherein the method comprises:

modulating first data to obtain a first UWB frame, wherein the first data comprises a plurality of bits, the first UWB frame comprises one or more modulation symbols, a first modulation symbol is any one of the one or more modulation symbols, the first modulation symbol represents M bits of the plurality of bits, the first modulation symbol comprises pulse signals of K frequencies, M is an integer greater than or equal to 2, and K is an integer less than or equal to M and greater than or equal to 0; and

sending the first UWB frame.

2. The method according to claim 1, wherein

values of the M bits are all a first value, and K=0;

values of the M bits are all a second value, and K=M; or

values of the M bits comprise a first value and a second value, and K is an integer less than M and greater than 0, wherein

the first value is 0, and the second value is 1; or the first value is 1, and the second value is 0.

3. The method according to claim 1 or 2, wherein

the M bits correspond to M frequencies, and if a value of a first bit in the M bits is the first value, the first modulation symbol does not comprise a pulse signal of a frequency corresponding to the first bit, or if a value of a first bit in the M bits is the second value, the first modulation symbol comprises a pulse signal of a frequency corresponding to the first bit, wherein

the first value is 0, and the second value is 1; or the first value is 1, and the second value is 0.

4. The method according to any one of claims 1 to 3, wherein energy or power of the first modulation symbol is related to a value of K.

5. The method according to claim 4, wherein the energy or power of the first modulation symbol is K*P, wherein P is energy or power of a pulse signal of one frequency, P is greater than 0 and less than or equal to a first threshold, and the first threshold is based on a maximum power spectral density constraint and a bandwidth of the pulse signal of the frequency.

6. The method according to any one of claims 1 to 5, wherein the pulse signals of the K frequencies are simultaneously sent.

7. The method according to claim 6, wherein the sending device comprises a signal generation apparatus, an adder, and a delayer, the M bits one-to-one correspond to M duration, the M bits correspond to the M frequencies, and the modulating first data to obtain a first UWB frame comprises:

if a value of a bit corresponding to $i^{th}$ duration in the M duration is the second value, generating, by the signal generation apparatus, a pulse signal of an $i^{th}$ frequency in the M frequencies in the $i^{th}$ duration; or if a value of a bit corresponding to $i^{th}$ duration in the M duration is the first value, skipping generating a pulse signal of an $i^{th}$ frequency in the M frequencies in the $i^{th}$ duration, wherein i is an integer from 1 to M;

delaying, by the delayer, pulse signals output by the signal generation apparatus in the M duration, so that the pulse signals output in the M duration simultaneously arrive at the adder; and

obtaining, by the adder, the first modulation symbol based on the pulse signals that are output in the M duration and that simultaneously arrive.

8. The method according to claim 7, wherein the delayer comprises M-1 delayers, pulse signals output by the signal generation apparatus in first duration to $(M-1)^{th}$ duration are delayed using the M-1 delayers respectively, delay duration of an $i^{th}$ delayer in the M-1 delayers is T*(M-i)+$\delta_i$, T indicates any duration in the M duration, and $\delta_i$ is a constant.

9. The method according to any one of claims 6 to 8, wherein the signal generation apparatus comprises at least one of the following: a pulse generator, an oscillator, or a mixer, and the generating, by the signal generation apparatus, a pulse signal of an $i^{th}$ frequency in the M frequencies in the $i^{th}$ duration comprises:

generating, by the oscillator, an $i^{th}$ carrier signal in the $i^{th}$ duration, and obtaining, by the mixer, the pulse signal of the $i^{th}$ frequency based on the $i^{th}$ carrier signal and a pulse signal from the pulse generator; or

generating, by the pulse generator, the pulse signal of the $i^{th}$ frequency in the $i^{th}$ duration; or

generating, by the oscillator, the pulse signal of the $i^{th}$ frequency in the $i^{th}$ duration.

10. The method according to any one of claims 1 to 5, wherein sending time of the pulse signals of the K frequencies is different, and the pulse signals of the K frequencies are in duration of the first modulation symbol in time domain.

11. The method according to claim 10, wherein the sending device comprises a signal generation apparatus, the M bits one-to-one correspond to M duration, the M bits correspond to the M frequencies, and the modulating first data to obtain a first UWB frame comprises:

if a value of a bit corresponding to $i^{th}$ duration in the M duration is the second value, generating, by the signal generation apparatus, a pulse signal of an $i^{th}$ frequency in the M frequencies in the $i^{th}$ duration; or if a value of a bit corresponding to $i^{th}$ duration in the M duration is the first value, skipping generating a pulse signal of an $i^{th}$ frequency in the M frequencies in the $i^{th}$ duration, wherein i is an integer from 1 to M.

12. The method according to claim 11, wherein a clock frequency of the sending device is greater than or equal to a first frequency, and a reciprocal of the first frequency is a sending time difference between pulse signals of any two adjacent sending frequencies in pulse signals of the M frequencies.

13. The method according to claim 10, wherein the sending device comprises a pulse generator, a delayer, a mixer, and an oscillator, wherein the M bits one-to-one correspond to M duration, the M bits correspond to the M frequencies, i is an integer from 1 to M, and the modulating first data to obtain a first UWB frame comprises:

generating, by the pulse generator, a baseband pulse signal in $i^{th}$ duration in the M duration; delaying, by the delayer, a baseband pulse signal output by the pulse generator in M-1 duration in the M duration, so that baseband pulse signals output in the M duration arrive at the mixer in a time division mode; and if a value of a bit corresponding to the $i^{th}$ duration in the M duration is the second value, generating, by the oscillator, an $i^{th}$ carrier signal in the $i^{th}$ duration, and obtaining, by the mixer, a pulse signal of an $i^{th}$ frequency based on the baseband pulse signal and the $i^{th}$ carrier signal; or if a value of a bit corresponding to the $i^{th}$ duration in the M duration is the first value, skipping generating the $i^{th}$ carrier signal in the $i^{th}$ duration.

14. The method according to claim 13, wherein the delayer comprises M-1 delayers, baseband pulse signals output by the pulse generator in first duration to $(M-1)^{th}$ duration are delayed using the M-1 delayers respectively, and delay duration of an $m^{th}$ delayer in the M-1 delayers is m times a sending time difference between pulse signals of any two adjacent sending frequencies in pulse signals of the M frequencies, wherein m is a positive integer less than M.

15. The method according to any one of claims 1 to 14, wherein before the modulating first data, the method further comprises:
receiving first indication information from a receiving device, wherein the first indication information indicates at least one of the following:

a frequency supported by the receiving device for demodulation;
a value of M;
a recommended symbol rate, wherein the symbol rate is used to determine the duration of the first modulation symbol;
a recommended data rate, wherein the data rate is a transmission rate of the first data;
recommended duty cycle information, wherein the duty cycle information is used to determine one or more of the following: the duration of the first modulation symbol, a value of M, or a transmission rate of the first data;
multipath delay spread information, wherein the multipath delay spread information is used to determine the duration of the first modulation symbol; or
channel state information, wherein the channel state information is used to determine a transmission rate of the first data.

16. The method according to any one of claims 1 to 15, wherein the method further comprises:
sending second indication information, wherein the second indication information indicates at least one of the following:

the M frequencies;
the value of M;
a symbol rate of the first data;
a data rate of the first data; or
a sending time difference between pulse signals of any two adjacent sending frequencies in the pulse signals of the K frequencies when K=M.

17. The method according to any one of claims 1 to 16, wherein
the one or more modulation symbols are located in a payload of the first UWB frame, the first UWB frame further comprises a synchronization header SHR and/or a physical header PHR, the SHR and/or the PHR comprise/comprises pulse signals/a pulse signal of one of the M frequencies, and the M frequencies correspond to the M bits.

18. A communication method, applied to a receiving device, wherein the method comprises:

receiving a first UWB frame; and
demodulating the first UWB frame to obtain first data, wherein the first data comprises a plurality of bits, the first UWB frame comprises one or more modulation symbols, a first modulation symbol is any one of the one or more modulation symbols, the first modulation symbol represents M bits of the plurality of bits, the first modulation symbol comprises pulse signals of K frequencies, M is an integer greater than or equal to 2, and K is an integer less than or equal to M and greater than or equal to 0.

19. The method according to claim 18, wherein

K=0, and values of the M bits are all a first value; or

K=M, and values of the M bits are all a second value; or

K is an integer less than M and greater than 0, and values of the M bits comprise a first value and a second value, wherein

the first value is 0, and the second value is 1; or the first value is 1, and the second value is 0.

20. The method according to claim 18 or 19, wherein

the M bits correspond to M frequencies, and if the first modulation symbol does not comprise a pulse signal of a frequency corresponding to a first bit in the M bits, the value of the first bit is the first value, or if the first modulation symbol comprises a pulse signal of a frequency corresponding to a first bit in the M bits, the value of the first bit is the second value, wherein

the first value is 0, and the second value is 1; or the first value is 1, and the second value is 0.

21. The method according to any one of claims 18 to 20, wherein energy or power of the first modulation symbol is related to a value of K.

22. The method according to claim 21, wherein
the energy or power of the first modulation symbol is K*P, wherein P is energy or power of a pulse signal of one frequency, P is greater than 0 and less than or equal to a first threshold, and the first threshold is based on a maximum power spectral density constraint and a bandwidth of the pulse signal of the frequency.

23. The method according to any one of claims 18 to 22, wherein the receiving device comprises M signal processing apparatuses, and the demodulating the first UWB frame to obtain first data comprises:
separately processing, by the M signal processing apparatuses, the first UWB frame, to determine a frequency of a pulse signal comprised in the first UWB frame, and determining the first data based on the frequency of the pulse signal comprised in the first UWB frame.

24. The method according to any one of claims 18 to 23, wherein before the receiving a first UWB frame, the method further comprises:
sending first indication information to a sending device, wherein the first indication information indicates at least one of the following:

a frequency supported by the receiving device for demodulation;
a value of M;
a recommended symbol rate, wherein the symbol rate is used to determine duration of the first modulation symbol;
a recommended data rate, wherein the data rate is a transmission rate of the first data;
recommended duty cycle information, wherein the duty cycle information is used to determine one or more of the following: duration of the first modulation symbol, a value of M, or a transmission rate of the first data;
multipath delay spread information, wherein the multipath delay spread information is used to determine duration of the first modulation symbol; or
channel state information, wherein the channel state information is used to determine a transmission rate of the first data.

25. The method according to any one of claims 18 to 24, wherein the method further comprises:
receiving second indication information, wherein the second indication information indicates at least one of the following:

the M frequencies;
the value of M;
a symbol rate of the first data;
a data rate of the first data; or
a sending time difference between pulse signals of any two adjacent sending frequencies in the pulse signals of the K frequencies when K=M.

26. The method according to any one of claims 18 to 25, wherein the one or more modulation symbols are located in a payload of the first UWB frame, and the method further comprises:

receiving a pulse signal of one of the M frequencies; and
obtaining, based on the pulse signal of the frequency, a synchronization header SHR and/or a physical header PHR comprised in the first UWB frame.

27. A communication apparatus, comprising a signal generation apparatus, an adder, and M-1 delayers, wherein there are M paths between the signal generation apparatus and the adder, and on M-1 paths in the M paths, the M-1 delayers are connected between the signal generation apparatus and the adder, wherein

the signal generation apparatus is configured to:
if a value of a bit corresponding to $i^{th}$ duration in M duration is a second value, generate a pulse signal of an $i^{th}$ frequency in M frequencies in the $i^{th}$ duration; or if a value of a bit corresponding to $i^{th}$ duration in M duration is a first value, skip generating a pulse signal of an $i^{th}$ frequency in M frequencies in the $i^{th}$ duration, wherein i is an integer from 1 to M;

the M-1 delayers are configured to delay a pulse signal output by the signal generation apparatus in M-1 duration in the M duration, so that pulse signals output in the M duration simultaneously arrive at the adder; and

the adder is configured to obtain a first modulation symbol based on the pulse signals that are output in the M duration and that simultaneously arrive, wherein the first modulation symbol is any one of one or more modulation symbols comprised in a first UWB frame, the first modulation symbol represents M bits of a plurality of bits comprised in first data, the M bits one-to-one correspond to the M duration, the M bits correspond to the M frequencies, the first modulation symbol comprises pulse signals of K frequencies, M is an integer greater than or equal to 2, and K is an integer less than or equal to M and greater than or equal to 0.

28. The communication apparatus according to claim 27, wherein delay duration of an $i^{th}$ delayer in the M-1 delayers is $T*(M-i)+\delta_i$, T indicates any duration in the M duration, and $\delta_i$ is a constant.

29. The communication apparatus according to claim 27 or 28, wherein the signal generation apparatus is configured to generate the pulse signal of the $i^{th}$ frequency in the M frequencies in the $i^{th}$ duration in the following manner:

an oscillator, configured to generate an $i^{th}$ carrier signal in the $i^{th}$ duration; and a mixer, configured to obtain the pulse signal of the $i^{th}$ frequency based on the $i^{th}$ carrier signal and a pulse signal from a pulse generator, wherein the signal generation apparatus comprises the pulse generator, the mixer connected to the pulse generator, and the oscillator connected to the mixer; or

a pulse generator, configured to generate the pulse signal of the $i^{th}$ frequency in the $i^{th}$ duration, wherein the signal generation apparatus comprises the pulse generator; or

an oscillator, configured to generate the pulse signal of the $i^{th}$ frequency in the $i^{th}$ duration, wherein the signal generation apparatus comprises the oscillator.

30. A communication apparatus, comprising a processor and a memory, wherein the memory is coupled to the processor, and the processor is configured to perform the method according to any one of claims 1 to 17 or the method according to any one of claims 18 to 26.

31. A computer-readable storage medium, wherein the computer-readable storage medium is configured to store a computer program, and when the computer program is run on a computer, the computer is enabled to perform the method according to any one of claims 1 to 17 or the method according to any one of claims 18 to 26.

32. A chip system, wherein the chip system comprises: a processor and an interface, wherein the processor is configured to invoke instructions from the interface and run the instructions, and when executing the instructions, the processor implements the method according to any one of claims 1 to 17 or the method according to any one of claims 18 to 26.

33. A computer program product, wherein the computer program product comprises a computer program, and when the computer program is run on a computer, the computer is enabled to perform the method according to any one of claims 1 to 17 or the method according to any one of claims 18 to 26.

FIG. 1

Multipath delay spread

FIG. 2

Four pulses (8 ns) are sent on each symbol

Guard interval (40 ns)

FIG. 3

FIG. 4

Receiving device

Sending device

S504: Capability information of the sending device

S503: Capability information of the receiving device

S502: Auxiliary information

S501: Modulate first data to obtain a first UWB frame, where the first UWB frame includes one or more modulation symbols, one modulation symbol represents M bits, and M is greater than or equal to 2

S505: First UWB frame

S506: Demodulate the first UWB frame to obtain the first data

FIG. 5

00

Time
domain

$p(t) * sin(2\pi f_1 t + \theta_1)$

01

Frequency
domain

CH8

$f_1$

10

Time
domain

$p(t) * sin(2\pi f_2 t + \theta_2)$

11

$p(t) * (sin(2\pi f_1 t + \theta_1) + sin(2\pi f_2 t + \theta_2))$

Frequency
domain

CH9

$f_2$

CH8  CH9

$f_1$  $f_2$

FIG. 6

000

Time domain

Frequency domain

001

Time domain $p(t) * sin(2\pi f_1 t + \theta_1)$

Frequency domain CH8 $f_1$

010

Time domain $p(t) * sin(2\pi f_2 t + \theta_2)$

Frequency domain CH9 $f_2$

100

Time domain $p(t) * sin(2\pi f_3 t + \theta_3)$

Frequency domain CH10 $f_3$

011

Time domain $p(t) * (sin(2\pi f_1 t + \theta_1) + sin(2\pi f_2 t + \theta_2))$

Frequency domain CH8 CH9 $f_1$ $f_2$

101

Time domain $p(t) * (sin(2\pi f_1 t + \theta_1) + sin(2\pi f_3 t + \theta_3))$

Frequency domain CH8 CH10 $f_1$ $f_3$

110

Time domain $p(t) * (sin(2\pi f_2 t + \theta_2) + sin(2\pi f_3 t + \theta_3))$

Frequency domain CH9 CH10 $f_2$ $f_3$

111

Time domain $p(t) * (sin(2\pi f_1 t + \theta_1) + sin(2\pi f_2 t + \theta_2) + sin(2\pi f_3 t + \theta_3))$

Frequency domain CH8 CH9 CH10 $f_1$ $f_2$ $f_3$

FIG. 7

FIG. 8

FIG. 9A

FIG. 9B

Frequency $f_3$

First switch                      Adder

Signal generation apparatus

Second delayer

Frequency $f_2$

First delayer

Frequency $f_1$

FIG. 10A

Transmit
antenna

Frequency $f_3$

Mixer

First switch

Adder

Baseband
processor

Pulse
generator

Frequency $f_2$

Second
delayer

Power
amplifier

Oscillator

Frequency $f_1$

First
delayer

FIG. 10B

FIG. 11

FIG. 12

Receive
antenna

First signal processing
apparatus

Power
amplifier

Oscillator

Second signal
processing apparatus

FIG. 13A

FIG. 13B

Communication
apparatus 1400

1401        1405

1403

Processor    Processor

CPU 0        CPU 0

CPU 1        CPU 1

Communication
line 1402

Memory

1404

Communication
interface

FIG. 14

Apparatus 1500

1501        1502        1503

Sending     Processing   Receiving
unit        unit         unit

FIG. 15

## INTERNATIONAL SEARCH REPORT

| | International application No. |
|---|---|
| | **PCT/CN2023/110167** |

**A.    CLASSIFICATION OF SUBJECT MATTER**

H04B1/7176(2011.01)i

According to International Patent Classification (IPC) or to both national classification and IPC

**B.    FIELDS SEARCHED**

Minimum documentation searched (classification system followed by classification symbols)

IPC：H04B

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT: 开/关键控调制, 正交幅度调制, 频移键控调制, 正交相移键调制, 符号, 比特, 频率, 帧, 相等, 等于, 对应, 超带宽, 多, 两个, 载波, 信道, OOK, QAM, FSK, QPSK, symbol, bit, frequency, frame, equal, corresponding, UWB, multiple, two, carrier, channel

**C.    DOCUMENTS CONSIDERED TO BE RELEVANT**

| Category* | Citation of document, with indication, where appropriate, of the relevant passages | Relevant to claim No. |
|---|---|---|
| X | CN 111801900 A (QUALCOMM, INC.) 20 October 2020 (2020-10-20) description, paragraphs 40-91 | 1, 4-6, 9-10, 15-18, 21-26, 30-33 |
| A | CN 107534542 A (INTEL CORP.) 02 January 2018 (2018-01-02) entire document | 1-33 |
| A | US 10491261 B1 (AL EIDAN ABDULLAH A.) 26 November 2019 (2019-11-26) entire document | 1-33 |
| A | CN 110635863 A (HUAWEI TECHNOLOGIES CO., LTD.) 31 December 2019 (2019-12-31) entire document | 1-33 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 September 2023** | **07 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/110167**

| Patent document cited in search report | | | Publication date (day/month/year) | Patent family member(s) | | | Publication date (day/month/year) |
|---|---|---|---|---|---|---|---|
| CN | 111801900 | A | 20 October 2020 | TW | 201939989 | A | 01 October 2019 |
| | | | | EP | 3763054 | A1 | 13 January 2021 |
| | | | | US | 2019273647 | A1 | 05 September 2019 |
| | | | | US | 10484228 | B2 | 19 November 2019 |
| | | | | WO | 2019173023 | A1 | 12 September 2019 |
| | | | | IN | 202017034945 | A | 25 September 2020 |
| CN | 107534542 | A | 02 January 2018 | DE | 112016002219 | T5 | 19 April 2018 |
| | | | | WO | 2016186738 | A1 | 24 November 2016 |
| | | | | US | 2018176053 | A1 | 21 June 2018 |
| | | | | US | 10341149 | B2 | 02 July 2019 |
| | | | | CN | 107534542 | B | 30 October 2020 |
| US | 10491261 | B1 | 26 November 2019 | None | | | |
| CN | 110635863 | A | 31 December 2019 | WO | 2019242738 | A1 | 26 December 2019 |
| | | | | CN | 110635863 | B | 01 June 2021 |

Form PCT/ISA/210 (patent family annex) (July 2022)

## REFERENCES CITED IN THE DESCRIPTION

**Patent documents cited in the description**

- CN 202210926673

- CN 202211167059